# EUROPEAN PATENT SPECIFICATION

(11) **EP 0 952 191 B1**
(45) Date of publication and mention of the grant of the patent: **10.07.2002**
(21) Application number: 99107394.1
(22) Date of filing: 23.04.1999
(51) Int. Cl.: C09B 67/22, C09D 11/02, C09B 41/00

(54) **Disazo pigment composition, printing ink containing the same and a method for manufacturing the same**
Disazopigmentzusammensetzung und Drucktinten die sie enthalten sowie ein Verfahren zu deren Herstellung
Composition de pigment disazoique , encres d'impression contenant une telle composition et une méthode pour la préparer

(30) Priority: 24.04.1998 JP 11503398
(43) Date of publication of application: 27.10.1999
(73) Proprietor: DAINIPPON INK AND CHEMICALS, INC., Itabashi-ku Tokyo (JP)
(72) Inventor: Ando, Hirohito, Namekata-gun, Ibaraki-ken (JP); Aoki, Shigeto, Kashima-gun, Ibaraki-ken (JP); Tomioka, Sadayuki, Kashima-shi, Ibaraki-ken (JP); Kobayashi, Nagatoshi, Kashima-shi, Ibaraki-ken (JP)
(74) Representative: Albrecht, Thomas, Dr.

(56) References cited:
- EP-A- 0 263 951
- EP-A- 0 823 459
- EP-A- 0 826 742
- FR-A- 2 084 544
- PATENT ABSTRACTS OF JAPAN vol. 005, no. 008 (C-039), 20 January 1981 (1981-01-20) & JP 55 135165 A (DAINICHI SEIKA KOGYO KK), 21 October 1980 (1980-10-21)
- SHIRONG W ET AL: "The Effects of Mixed Coupling on the Properties of C.I. Pigment Yellow 12" DYES AND PIGMENTS,GB,ELSEVIER APPLIED SCIENCE PUBLISHERS. BARKING, vol. 38, no. 4, page 185-193 XP004123533 JP55135165 ISSN: 0143-7208
- PATENT ABSTRACTS OF JAPAN vol. 012, no. 455 (C-548), 29 November 1988 (1988-11-29) & JP 63 178169 A (DAINIPPON INK & CHEM INC), 22 July 1988 (1988-07-22)

## Description

### TECHNICAL FIELD OF THE INVENTION

The present invention relates to a disazo pigment composition and a printing ink; a method for manufacturing the same; and a method for improving the same. More specifically, the present invention relates to (1) a method for manufacturing a disazo pigment that is capable of producing a printing ink with a superior transparency and flow ability; (2) a disazo pigment capable of producing a printing ink with a superior transparency and flow ability; and (3) a printing ink that exhibits a superior transparency and flow ability.

This application is based on the patent application No. Hei 10-115033, filed in Japan, the contents of which are incorporated herein by reference.

### BACKGROUND ART

As examples of conventional methods for improving transparency and flow ability of printing inks containing disazo pigments, Japanese Patent Application, Second Publication No. Sho 45-11026 discloses a method for mixing sulfonic acid compounds into disazo pigments; Japanese Patent Application, Second Publication No. Sho. 55-49087 discloses a method for using a disazo pigment formed by using a mixture of non-polar coupling components and polar coupling components having carboxyl groups and/or sulfo groups as coupling components; and Japanese Patent Application, First Publication No. Sho 63-72762 and Japanese Patent Application, First Publication No. Sho 63-178169 respectively disclose a method of using a disazo pigment composition containing asymmetric disazo compounds which are formed from polar coupling components and non-polar coupling components, respectively. Among these disclosures, it is known that a disazo pigment obtained according to the method disclosed in Japanese Patent Application, Second Publication No. Sho. 55-49087 is more effective in improving the transparency of printing inks, and that a disazo pigment composition disclosed in Japanese Patent Application, First Publication No. Sho 63-178169 is more effective in improving the flow ability of printing inks.

In addition, as a method for improving the transparency, WO97/31067 discloses a method for coupling non-polar coupling components and tetrazo component of the benzidines. However, the extent of improvement in the transparency according to WO97/31067 is remarkably small, and Furthermore, no suggestions regarding the flow ability were mentioned.

With regard to methods for manufacturing printing inks, there exist a manufacturing method for dispersing wet pigments by means of using a kneader; and a manufacturing method for dispersing powder pigments by means of using a triple roll or beads mill. The choice of the manufacturing method is based mainly on the productivity and demands for the inks. There are several determining factors for the quality required for printing inks; among these, however, it is most important to choose a pigment that is appropriate for the intended use, as well as for the manufacturing method.

In the printing industry, printing inks exhibiting a high transparency are in great demand for their role in improving the clearness of the prints. Additionally, in the printing industry, from the viewpoint of increased productivity, the printing speed is undergoing remarkable improvements. Currently, a printing machine capable of printing at a speed of 4 meter per second enjoys widespread use as the industry standard, however, a printing machine capable of printing 15 meter per second has been already developed. In accordance with this increasing printing speed, flow abilities greater than those obtained to date are highly desired for the printing inks.

Conventionally, as a method for effectively improving the transparency, Japanese Patent Application, Second Publication No. Sho. 55-49087 is known. The method disclosed in Japanese Patent Application, Second Publication No. Sho. 55-49087 provides for the synthesis of a) a disazo pigment (represented by the following general formula A), which comprises a non-polar coupling component (represented by the following general formula I) and a non-polar coupling component (represented by the following general formula I); and b) an asymmetric disazo compound (represented by the following general formula B) comprising a polar coupling component (represented by the following general formula II) and a non-polar coupling component (represented by the following general formula I); and (c) a symmetric disazo compound (represented by the following general formula C) comprising a polar coupling component (represented by the following general formula II) and a polar coupling component (represented by the following general formula II), in the same reaction vessel. The asymmetric disazo compound (represented by the following general formula B) is known for its effects in improving the transparency and flow ability of printing inks.

However, although the method disclosed in Japanese Patent Application, Second Publication No. Sho. 55-49087 produces an asymmetric disazo compound (represented by the following general formula B) effective in improving the transparency, it also results in the large production of a symmetric disazo compound (represented by the following general formula C), which deteriorates the transparency and flow ability. Therefore, this method has failed to provide the necessary transparency desired by the present printing industry.

Additionally, if the speed of dissolving the non-polar coupler component (represented by the following general formula I) into an acidic solution varies from that of the polar coupler component (expresses by the following general formula II), it is impossible to adsorb the asymmetric disazo compound (represented by the following general formula II), which is effective in improving the transparency and flow ability, uniformly to the disazo pigment (represented by the following general formula A), or introduce the asymmetric disazo compound into the crystalline structure. As a result, it becomes impossible to provide the necessary transparency demanded by the present printing industry.

In other words, when the speed of dissolving the polar coupler component (represented by the following general formula II) into an acidic solution is faster than the speed of dissolving the non-polar coupler component (represented by the following general formula I) into an acidic solution, the asymmetric disazo compound (represented by the following general formula B) and the symmetric disazo compound (represented by the following general formula C) are preferentially produced at the initial stage of the coupling reaction, and in the middle to later stages of the coupling reaction, only the disazo pigment (represented by the following general formula A) is produced. Thus, it is impossible to provide the transparency required by the present printing industry.

In contrast, when the speed of dissolving the polar coupler component (represented by the following general formula II) into an acidic solution is slower than the speed of dissolving the non-polar coupler component (represented by general formula I) into an acidic solution, only the disazo pigment (represented by the following general formula A) is produced from the initial to middle stages of the coupling reaction, with the asymmetric disazo compound (represented by the following general formula B) and the symmetric disazo compound (represented by the following general formula C) being preferentially produced during the later stage of the coupling reaction. Thus, in a similar manner, it is impossible to provide the transparency required by the present printing industry.

As a result of reasons similar to the aforementioned, the method disclosed in Japanese Patent Application, Second Publication No. Sho 55-49087 failed to provide the flow ability required by the present printing industry.

CH₃COCH₂CONH - Z General Formula (I)

[wherein, Z represents a phenyl group which may contain 1 to 4 identical or different substituent group(s), selected from the group consisting of a methyl group, methoxy group, and chlorine atom].

CH₃COCH₂CONH - Y General Formula (II)

[wherein, Y represents a phenyl group which may contain 1 to 4 identical or different substituent group(s), selected from the group consisting of a methyl group, methoxy group, hydroxide group, and chlorine atom, and containing 1 to 4 identical or different substituent group(s), selected from the group consisting of a carboxyl group, sulfo group, and alkali metal salts thereof]. 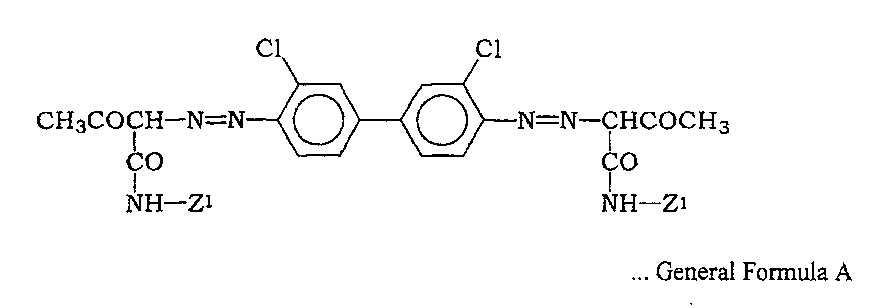 [wherein, Z¹ represents a phenyl group, which may contain 1 to 4 identical or different substituent group(s), selected from the group consisting of a methyl group, methoxy group, and chlorine atom]. 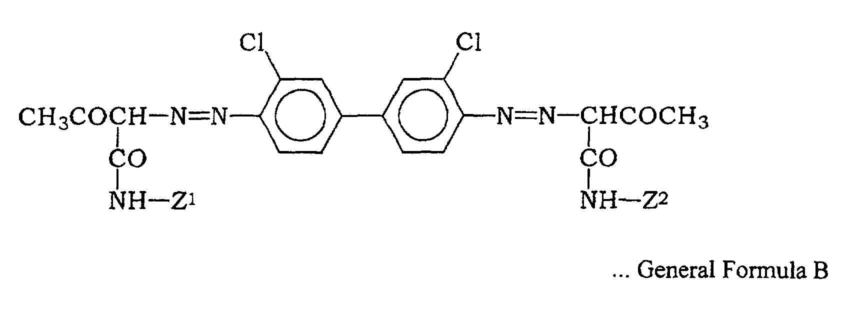 [wherein, Z¹ represents a phenyl group, which may contain 1 to 4 identical or different substituent group(s), selected from the group consisting of a methyl group, methoxy group, and chlorine atom; and Z² represents a phenyl group which may contain 1 to 4 identical or different substituent group(s), selected from the group consisting of a methyl group, methoxy group, hydroxide group, and chlorine atom; and containing 1 to 4 identical or different substituent group(s), selected from the group consisting of a carboxyl group, sulfo group, and alkali metal salts thereof]. 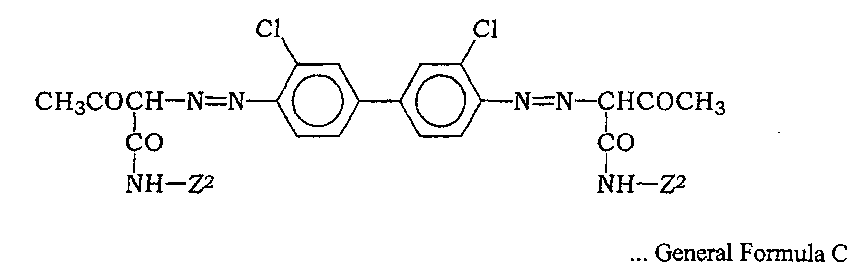 [wherein, Z² represents a phenyl group which may contain 1 to 4 identical or different substituent group(s), selected from the group consisting of a methyl group, methoxy group, hydroxide group, and chlorine atom; and containing 1 to 4 identical or different substituent group(s), selected from the group consisting of a carboxyl group, sulfo group, and alkali metal salts thereof].

Additionally, as a conventional technology for effectively improving the flow ability, the method disclosed in Japanese Patent Application, First Publication No. Sho. 63-178169 is known. The method disclosed in Japanese Patent Application, First Publication No. Sho. 63-178169 relates to a disazo pigment composition, which is formed by means of synthesizing an asymmetric disazo compound (represented by general formula B) comprising a polar coupling component and a non-polar coupling component, and adding the asymmetric disazo compound (represented by general formula B) to a separately synthesized, disazo pigment (represented by general formula A), comprising a non-polar coupling component and a non-polar coupling component.

However, due to collision of the particles resulting from the stirring during the process of synthesis, or forces imposed during the processes of filtration, drying, and grinding, particles of the disazo pigment and the asymmetric disazo compound become aggregated, which makes it difficult to adsorb the asymmetric disazo compound to the primary particle surface of the disazo pigment, thereby resulting in a failure to provide the flow ability required by the present printing industry. Due to reasons similar to the aforementioned, the above method is not able provide the transparency required by the present printing industry.

Herein, although an attempt was made at increasing the blending amount of the asymmetric disazo compound (represented by general formula B), a deterioration in the tinting strength occurred, such that the above method was not able to provide a disazo pigment suitable for practical use.

In addition, as a conventional technology for improving the transparency, the method disclosed in WO97/31067 is also known. The method disclosed in WO97/31067 relates to a method for manufacturing a disazo pigment, which is formed by means of coupling the tetrazo component of the benzidine in an acidic solution. This method effectively reduces the aromatic amines, which are by-products of the reaction, by means of improving the coupling reaction rate, resulting in an easier removal of unreacted coupling components. Additionally, it is disclosed that when used as a coloring agent, the resultant pigment results in an improvement in the transparency, the tinting strength, and glossiness thereof. The method disclosed in WO97/31067 shows a slight improvement in the transparency, when compared with the conventional method for manufacturing a disazo pigment, in which coupling with the tetrazo component of the benzidine is performed in an acidic solution after precipitating the non-polar coupling components.

However, the mechanism for improving the transparency in the aforementioned method lies in the removal of the unreacted, non-polar coupling components, which have a lower light transmittance and lower transparency (i.e., higher hiding power), compared to those of a disazo pigment. Thus, the extent of the improvement in the transparency is remarkably small, and the method has failed to provide the transparency required by the present printing industry.

Moreover, the method disclosed in WO97/31067 makes no disclosure relating to the flow ability, nor provides any effects of improving the flow ability.

Furthermore, according to the aforementioned conventional method which can produce a disazo pigment derivative (represented by general formula B) comprising an asymmetric disazo compound, and a disazo pigment (represented by general formula A) simultaneously, the maximum weight ratio of the asymmetric disazo compound (represented by general formula B) to the symmetric disazo compound (represented by general formula C) is limited to 90:10. Therefore, this method is still unsatisfactory from the standpoint of a variety of other properties.

### DISCLOSURE OF THE INVENTION

The object of the present invention is to provide (1) a method for manufacturing a disazo pigment that is capable of producing a printing ink with a superior transparency and flow ability; (2) a disazo pigment that is capable of producing a printing ink with a superior transparency and flow ability; and (3) a printing ink that exhibits a superior transparency and flow ability. In addition, another object of the present invention relates to a method for improving the properties of the pigment.

The inventors of the present invention have achieved the present invention as a result of intense research to develop (1) a method for manufacturing a disazo pigment that is capable of producing a printing ink with a superior transparency and flow ability; (2) a disazo pigment that is capable of producing a printing ink with a superior transparency and flow ability; and (3) a printing ink that exhibits a superior transparency and flow ability. In this manner, the inventors have found that the following means are effective in achieving the aforementioned objects. In other words, the present invention provides the following inventions.

A method for manufacturing a disazo pigment composition, wherein a disazo pigment and a disazo compound other than said disazo pigment, which can improve at. least one property among the transparency and flow ability of the pigment, can be produced simultaneously, by means of performing a coupling reaction of an aqueous coupler solution, containing a non-polar coupler component (I) and a polar coupler component (II), and an aqueous tetrazo solution, containing a tetrazo component of a benzidine in an acidic solution, such that, in the reaction system, none of the coupler components are substantially precipitated, and the tetrazo component reacts immediately.

A disazo pigment composition, characterized by comprising, as essential components, a disazo pigment and an asymmetric disazo compound having only one phenyl group which contains 1 to 4 identical or different substituent group(s), selected from the group consisting of a carboxyl group, sulfo group, and alkali metal salts thereof; wherein
at least a portion of said asymmetric disazo compound is adsorbed uniformly to the primary particles of said disazo pigment, or alternatively included in the crystalline structure thereof;
said disazo pigment composition comprises 98.0 to 72.3% by weight of said disazo pigment and 2.0 to 27.8% by weight of disazo compounds; and
said asymmetric disazo compound comprises at least 93 parts by weight, when the total weight of disazo compounds is 100 parts by weight.

A method for improving transparency and flow ability of said disazo pigment characterized by comprising, as essential components, a disazo pigment and an asymmetric disazo compound having only one phenyl group which contains 1 to 4 identical or different substituent group(s), selected from the group consisting of a carboxyl group, sulfo group, and alkali metal salts thereof; wherein
said disazo pigment composition comprises 98.0 to 72.3% by weight of said disazo pigment and 2.0 to 27.8% by weight of disazo compounds; and
said asymmetric disazo compound comprises at least 93 parts by weight, when the total weight of disazo compounds is 100 parts by weight; and
at least a portion of said asymmetric disazo compound is adsorbed uniformly to the primary particles of said disazo pigment, or alternatively included in the crystalline structure thereof.

A method for manufacturing a disazo pigment composition, wherein an aqueous coupler solution, containing a coupler component (I) represented by general formula (I) and a coupler component (II) represented by general formula (II), and an aqueous tetrazo solution, containing a tetrazo component of a benzidine, are continuously poured (or injected) into an acidic solution in a batch stirring tank, such that the ratio of the total molar supply speed of the coupler components (I) and (II) to the molar supply speed of the tetrazo component is in the range between 200:80 and 200:99, to induce a coupling reaction.

CH₃COCH₂CONH - Z General Formula (I)

[wherein, Z represents a phenyl group which may contain 1 to 4 identical or different substituent group(s), selected from the group consisting of a methyl group, methoxy group, and chlorine atom].

CH₃COCH₂CONH - Y General Formula (II)

[wherein, Y represents a phenyl group which may contain 1 to 4 identical or different substituent group(s), selected from the group consisting of a methyl group, methoxy group, hydroxide group, and chlorine atom; and containing 1 to 4 identical or different substituent group(s), selected from the group consisting of a carboxyl group, sulfo group, and alkali metal salts thereof].

Furthermore, an object of the present invention are to provide the following disazo pigment compositions and printing inks.
(1) A disazo pigment composition, which is formed by means of continuously pouring (or injecting) an aqueous coupler solution, containing a non-polar coupler component (I) represented by the above general formula (I) and a polar coupler component (II) represented by the above general formula (II), and an aqueous tetrazo solution containing a tetrazo component of a benzidine, into an acidic solution in a batch stirring tank, such that the ratio of the total molar supply speed of the non-polar coupler component (I) and the polar coupler component (II) to the molar supply speed of the tetrazo component is in the range between 200:80 and 200:99, to induce a coupling reaction.
(2) A disazo pigment composition according to the aforementioned (1), wherein the ratio of the total molar supply speed of the non-polar coupler component (I) and the polar coupler component (II) to the molar supply speed of the tetrazo component is in the range between 200:90 and 200:99.
(3) A disazo pigment composition according to the aforementioned (1) or (2), wherein after continuously pouring (or injecting) an aqueous coupler solution, containing a non-polar coupler component (I) and a polar coupler component (II), and an aqueous tetrazo solution, containing a tetrazo component of a benzidine, into an acidic solution in a batch stirring tank, only the aqueous tetrazo solution is additionally poured (or injected) therein.
(4) A disazo pigment composition according to one of the aforementioned (1), (2), or (3), wherein a buffer solution is present in the acidic solution in the aforementioned batch stirring tank.
(5) A disazo pigment composition according to one of the aforementioned (1), (2), (3), or (4), wherein an aqueous coupler solution, in which the total (sum) concentration of the non-polar coupler component (I) and the polar coupler component (II) is in the range of 0.1 to 1 mol/liter; and an aqueous tetrazo solution, the concentration of which is in the range of 0.05 to 0.8 mol/liter, are used.
(6) A disazo pigment composition according to one of the aforementioned (1), (2), (3), (4), or (5), wherein the ratio of the amount of the acidic solution to the amount of the aqueous coupler solution and the aqueous tetrazo solution poured (or injected) per minute is in the range of 1000:1 to 1000:50.
(7) A disazo pigment composition according to one of the aforementioned (1), (2), (3), (4), (5), or (6), wherein said non-polar coupler component (I) is at least one compound selected from the group consisting of acetoacetanilide, acetoacet-o-toluidide, and acetoacet-m-xylidide.
(8) A disazo pigment composition according to one of the aforementioned (1), (2), (3), (4), (5), (6), or (7), wherein said polar coupler component (II) is at least one compound selected from the group consisting of 4-acetoacetylaminobenzene sulfonic acid, 2-acetoacetylamino benzoic acid, 3-acetoacetylamino benzoic acid, 4-acetoacetylamino benzoic acid, and 5-acetoacetylamino-2-hydroxy benzoic acid.
(9) A disazo pigment composition according to one of the aforementioned (1), (2), (3), (4), (5), (6), (7), or (8), wherein said aqueous coupler solution is an alkali solution, and said aqueous tetrazo solution is a hydrochloric acid solution.
(10) A printing ink, which contains a disazo pigment composition according to one of the aforementioned (1), (2), (3), (4), (5), (6), (7), (8), or (9).

### BEST MODE OF CARRYING OUT THE INVENTION

The method for manufacturing a disazo pigment composition according to the present invention relates to a method for manufacturing a disazo pigment composition, wherein an aqueous coupler solution containing a coupler component (I) and a coupler component (II), and an aqueous tetrazo solution containing a tetrazo component of a benzidine, are poured into an acidic solution, to induce a coupling reaction.

Herein, a coupling reaction is performed by means of pouring the coupler components into an acidic solution, such that, in the reaction system, none of the coupler components are precipitated, and the tetrazo component reacts immediately. As a result, as described in greater detail below, at least a portion of the asymmetric disazo compound can be adsorbed uniformly to the primary particles of the aforementioned disazo pigment, or alternatively included in the crystalline structure thereof.

In the present invention, conventionally known and used coupler components may be used as the coupler component (I) and/or the coupler component (II). The pouring method is not particularly limited, however, pouring is continuously performed under normal circumstance. These aspect are described in detail below.

In other words, according to the method of the present invention, a disazo pigment, which comprises a disazo pigment (represented by general formula A), comprising a non-polar coupling component and a non-polar coupling component; an asymmetric disazo compound (represented by general formula B), comprising a polar coupling component and a non-polar coupling component; and a symmetric disazo compound (represented by general formula C) comprising two polar coupling components, is simultaneously provided, while manufacturing a disazo compound composition with a higher-than-conventional content ratio of the asymmetric disazo compound comprising a polar coupling component and a non-polar coupling component. 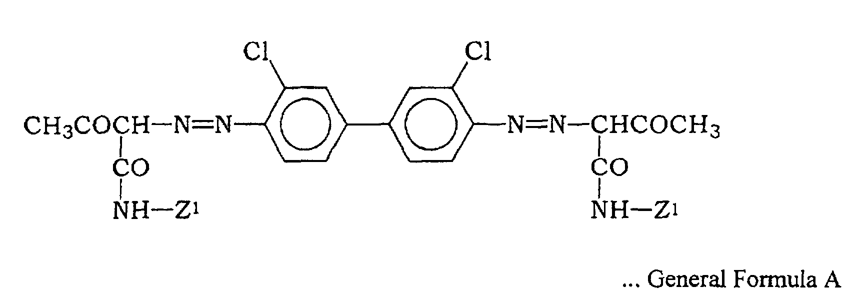 [wherein, Z¹ represents a phenyl group, which may contain 1 to 4 identical or different substituent group(s), selected from the group consisting of a methyl group, methoxy group, and chlorine atom]. 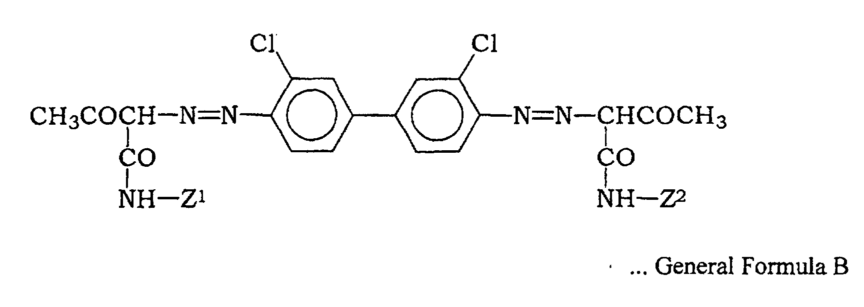 [wherein, Z¹ represents a phenyl group, which may contain 1 to 4 identical or different substituent group(s), selected from the group consisting of a methyl group, methoxy group, and chlorine atom; and Z² represents a phenyl group which may contain 1 to 4 identical or different substituent group(s), selected from the group consisting of a methyl group, methoxy group, hydroxide group, and chlorine atom; and containing 1 to 4 identical or different substituent group(s), selected from the group consisting of a carboxyl group, sulfo group, and alkali metal salts thereof]. 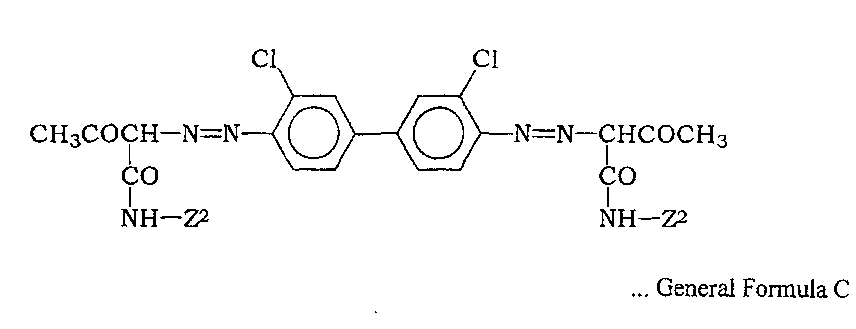 [wherein, Z² represents a phenyl group which may contain 1 to 4 identical or different substituent group(s), selected from the group consisting of a methyl group, methoxy group, hydroxide group, and chlorine atom; and contains 1 to 4 identical or different substituent group(s), selected from the group consisting of a carboxyl group, sulfo group, and alkali metal salts thereof].

The asymmetric disazo compound (above general formula B) is known to improve the transparency and flow ability of the printing ink.

According to the present invention, by means of synthesizing, simultaneously, this asymmetric disazo compound with a disazo pigment (represented by general formula A), it is possible to uniformly adsorb the asymmetric disazo compound, which is in a non-aggregate state, to the surface of the primary particles of the disazo pigment, which is similarly in a non-aggregate state; or alternatively to form a mixed crystal comprising the disazo pigment and the asymmetric disazo compound. In this manner, it is possible to introduce a polar group onto the surface of the disazo pigment, and thus to obtain a disazo pigment composition which can provide the printing ink with a superior transparency and flow ability.

The effects of the present invention are manifested synergistically in the ability to include a greater (more than the conventional) amount of the asymmetric component, (i.e., a pigment derivative component) in the total disazo pigment composition comprising the disazo pigment derivative, which corresponds to the asymmetric disazo compound, and the disazo pigment, which corresponds to the symmetric disazo compound; and the ability to produce the aforementioned disazo pigment and disazo pigment derivative almost simultaneously, when considering the change of the produced components during the reaction. In other words, even in the situation that both the disazo pigment and the disazo pigment derivative are finally produced, but either said pigment or said derivative is preferentially produced during the reaction, the resultant effects are unsatisfactory, even if the amount of disazo pigment contained is the same as that in the simultaneous synthesis situation. These effects of the invention meet the criteria of simultaneous synthesis.

According to the conventional method for manufacturing a disazo pigment composition, after the coupler component (I), or both the coupler component (I) and the coupler component (II), are dispersed in an acidic solution, an aqueous tetrazo solution containing a tetrazo component of a benzidine is added thereto.

Both the coupler component (I) and the coupler component (II) are less soluble and dissolve at a slow rate in an acidic solution. On the other hand, the aqueous tetrazo solution containing a tetrazo component of a benzidine reacts extremely well in the aforementioned environment.

Consequently, the rate determination of the reaction between the coupler component (I) and/or the coupler component (II), and the aqueous tetrazo solution, containing a tetrazo component of a benzidine, occurs during the course of dissolving the coupler component (I) and/or the coupler component (II), in an acidic solution.

If the speed of dissolving the coupler component (I) in an acidic solution differs from that of the coupler component (II), a smaller amount of the asymmetric disazo compound (represented by general formula B), which provides the effects of improving transparency and flow ability, and a greater amount of the symmetric disazo compound (represented by general formula C), which does not contribute towards improving transparency and flow ability, are produced. Thus, it becomes difficult to provide the superior transparency and flow ability, required by the present printing industry.

When comparing the present invention and WO97/31067, the foremost point of difference in the technical structures of the two disclosures lies in that only a non-polar coupler component is used in WO97/31067, while both a non-polar coupler component and polar coupler component are used in the present invention. Accordingly, the molar ratio of the total amount of the coupler components to the amount of the tetrazo component may be selected from within the range conventionally known. For example, the molar ratio of the total amount of the coupler components to the amount of the tetrazo component is in the range between 2:0.8 to 2:0.99. However, the molar supply speed can be expressed more precisely using this molar ratio.

According to the present invention, the total molar supply speed of the coupler component (I) and coupler component (II) is preferably faster than the molar supply speed of the tetrazo component; in this manner, a total molar supply speed of the former equaling 2.0 to 2.5 times the molar supply speed of the tetrazo component may be selectively obtained.

In other words, since the present invention provides a disazo pigment composition, the total number of moles of the coupler component (I) and the coupler component (II) supplied is preferably greater than the number of moles of the tetrazo component that are supplied, such that two azo bonds are formed (i.e., to form a 'disazo' compound), wherein the number of moles of the former is 2.0 to 2.5 times greater than the number of moles of the latter. In particular, the number of moles of the former is 2.0 to 2.5 times greater than the number of moles of the latter, optimally during, or at the point of pouring the aqueous tetrazo solution.

A preferred method for manufacturing a disazo pigment composition according to the present invention comprises performing a coupling reaction by means of continuously pouring an aqueous coupler solution containing a non-polar coupler component (I) and a polar coupler component (II), and an aqueous tetrazo solution containing a tetrazo component of a benzidine, into an acidic solution, such that the ratio of the total molar supply speed of the coupler component (I) and the coupler component (II) to the molar supply speed of the tetrazo component ranges between 200:80 and 200:99.

In other words, since an aqueous coupler solution concurrently containing a coupler component (I) and a coupler component (II) is used and supplied continuously into an acidic solution, the reaction with the aforementioned aqueous tetrazo solution containing a tetrazo component of a benzidine proceeds, during which time, the aforementioned coupler component (I) and coupler component (II) are either not precipitated, or precipitated in an extremely small amount.

Accordingly, a larger amount of the asymmetric disazo compound (represented by general formula B), which provides the advantageous effects of improving transparency and flow ability, is produced, while little to none of the symmetric disazo compound (represented by general formula C), which does not contribute towards improving the transparency and flow ability, is produced. Thus, it is possible to provide the necessary transparency and flow ability, required by the present printing industry.

In the case of using the same coupler components and tetrazo component, according to the manufacturing method of the present invention, either only the asymmetric disazo compound (represented by general formula B) is produced, or alternatively a weight ratio of the asymmetric disazo compound (represented by general formula B) to the symmetric disazo compound (represented by general formula C) of at least 93/7 can be produced. Furthermore, it is also possible to increase the content of the asymmetric disazo compound to produce a desirable weight ratio of 95/5 or greater.

Examples of the non-polar coupler component (I), employed in the present invention, include those represented by the aforementioned general formula (I), wherein two or more types of the aforementioned components can be used together, as long as they are represented by general formula (I).

Concrete examples of the non-polar coupler component (I) include acetoacetanilide, acetoacet-o-toluidide, acetoacet-m-xylidide, acetoacet-o-anisidide, acetoacet-p-anisidide, acetoacet-o-chloroanilide, acetoacet-2,5-dimethoxy-4-chloroanilide, and the like.

Among these, acetoacetanilide, acetoacet-o-toluidide, and acetoacet-m-xylidide are preferred from the standpoint of markedly improving the transparency according to the present invention.

Examples of the polar coupler component (II), employed in the present invention, include those represented by general formula (II), wherein two or more types of the components can be used together, as long as they are represented by general formula (II).

Concrete examples of the polar coupler component (II) include 2-acetoacetylaminobenzene sulfonic acid, 3-acetoacetylaminobenzene sulfonic acid, 4-acetoacetylaminobenzene sulfonic acid, 2-acetoacetylamino-5-methylbenzene sulfonic acid, 2-acetoacetylamino-4-chloro-5-methylbenzene sulfonic acid, 2-acetoacetylamino-5-chloro-4-methylbenzene sulfonic acid, 4-acetoacetylamino-2,5-dichlorobenzene sulfonic acid, 2-acetoacetylamino benzoic acid, 3-acetoacetylamino benzoic acid, 4-acetoacetylamino benzoic acid, 3-acetoacetylamino-4-chloro benzoic acid, 2-acetoacetylamino terephthalic acid, 3-acetoacetylamino isophthalic acid, 4-acetoacetylamino-2-hydroxy benzoic acid and 5-acetoacetylamino-2-hydroxy benzoic acid, and the like.

Among these, 4-acetoacetylaminobenzene sulfonic acid, 2-acetoacetylamino benzoic acid, 3-acetoacetylamino benzoic acid, 4-acetoacetylamino benzoic acid, and 5-acetoacetylamino-2-hydroxy benzoic acid are preferred from the standpoint of markedly improving the flow ability according to the present invention.

The ratio of the non-polar coupler component (I) to the polar coupler component (II), employed in the present invention, is not particularly limited. However, for example, if only these two components are used such that their total equals 100 mol %, then the non-polar coupler component (I) will comprise 85 to 99 mol %, and the polar coupler component (II) will comprise 1 to 15 mol %.

At this time, when forming a ratio in which the non-polar component (I) comprises 90 to 98 mol % and the polar coupler component (II) comprises 2 to 10 mol %, a disazo pigment composition can be provided, which not only exhibits a particularly superior transparency and flow ability, but also a superior tinting strength.

From the aforementioned molar ratio of coupler component (I) to coupler component (II), the weight ratio of all disazo compounds to the disazo pigment can be theoretically calculated, such that the disazo pigment will comprise 98.0 to 72.3 % by weight, and the disazo compound will comprise 2.0 to 27.8 % by weight, as described below.

In this manner, it is possible to manufacture a disazo pigment composition with a superior transparency and flow ability, simultaneously and easily, comprising, as essential components, a disazo pigment and a asymmetric disazo compound, wherein 1) at least a portion of said asymmetric disazo compound is adsorbed uniformly to the primary particles of said disazo pigment, or alternatively included in the crystalline structure thereof; 2) said disazo pigment composition comprises 98.0 to 72.3 % by weight of said disazo pigment and 2.0 to 27.8% by weight of disazo compounds; and 3) said asymmetric disazo compound comprises at least 93 parts by weight therein, when the total weight of disazo compounds is 100 parts by weight.

It is noted that higher the proportions of the asymmetric disazo compound to the total weight of disazo compounds are more preferable. Therefore, it is most ideal that the asymmetric disazo compound comprises the entirety (100 parts by weight) of the disazo compounds.

The aqueous coupler solution, employed in the present invention, comprises the non-polar coupler component (I) and the polar coupler component (II). As this aqueous coupler solution, an alkali solution is preferred, which can be obtained by means of dissolving the non-polar coupler component (I) and the polar coupler component (II) with an alkali.

Examples of the alkali may include inorganic bases such as sodium hydroxide, potassium hydroxide, and the like.

The aqueous tetrazo solution containing a tetrazo component of a benzidine, employed in the present invention, includes a solution obtained by means forming a tetrazo compound from a benzidine according to a conventional method. Examples of the aforementioned benzidine may include 3,3'-dichlorobenzidine, 2,2',5,5'-tetrachlorobenzidine, 3,3'-dimethoxybenzidine, and the like. As this aqueous solution, an acidic solution is preferred, and in particular, an aqueous solution of hydrochloric acid is preferably used.

In the present invention, the combination of an alkali solution as the aforementioned aqueous coupler solution, and an aqueous hydrochloric acid solution as the aqueous tetrazo solution, is preferred.

The acidic solution, into which the aqueous coupler solution and the aqueous tetrazo solution are poured, is prepared in advance in a reaction container, which normally comprises a batch stirring tank.

Hence, according to the present invention, the acidic solution is preferably prepared in advance, in a batch stirring tank. As the aforementioned batch stirring tank, any conventionally known batch stirring tank can be used. However, normally the tank comprises a water tank, which maintains a solvent that is added to the tank as a whole and requires stirring; and a stirrer having blades to stir the solvent. The acidic solution in the batch stirring tank, employed in the present invention, should be able to maintain the coupling reaction system in the pH range of 3 to 6.9, and more preferably in the pH range of 3.5 to 6.3. Any aqueous solution of a conventionally known acid, which can be used in a coupling reaction according to a conventional method, may be used.

It is preferable to maintain the aforementioned pH range of values, in order to minimize the side reactions of the tetrazo component such as decomposition and aggregation, and it is more preferred to maintain the aforementioned pH range of values from the start of the reaction through the completion of the reaction.

For this reason, an acid or an alkali may be added intermittently or continuously during the reaction process, however, it is preferable to also have a buffer solution present in the acidic solution contained in the batch stirring tank. From the standpoint of ease of operation, an aqueous solution with pH buffering action is used, such as acetic acid - sodium acetate, formic acid - sodium formate, and the like, which are commonly used in conventional coupling reactions. A buffer solution is preferably used, by which fluctuations of the pH value become smaller.

According to the present invention, pouring of the aqueous coupler solution, containing the non-polar coupler component (I) and the polar coupler component (II), and the aqueous tetrazo solution, containing a tetrazo component of a benzidine, into the acidic solution in the batch stirring tank, may be performed simultaneously, for example, through separate pouring tubes leading into the acidic solution.

In order to have at least a portion of the asymmetric disazo compound uniformly adsorbed to the primary particles of the aforementioned disazo pigment, or alternatively included in the crystalline structure thereof, pouring into the acidic solution may be performed simultaneously, e.g. as mentioned above, such that, in the reaction system, none of the coupler components are precipitated, and the tetrazo component reacts immediately. More concretely, for example, when pouring the aqueous coupler solution and the aqueous tetrazo solution into the acidic solution, the time periods for pouring each of the aforementioned aqueous solutions should at least overlap. In this state, there are cases when a portion of the pouring time period overlaps, or alternatively cases when the entire pouring time period for pouring the aqueous solutions overlaps. Preferably, the entire time of pouring each of the aqueous solutions will overlap. If necessary, it is also possible to have a period of time when only one of the aqueous coupler solution and the aqueous tetrazo solution is poured.

If the aqueous coupler solution and the aqueous tetrazo solution come into a direct contact with each other, the coupler components precipitate out to form a solid, creating the possibility of producing a smaller amount of the asymmetric disazo compound (represented by general formula B), which provides the favorable effects of improving transparency and flow ability, and a larger amount of the symmetric disazo compound (represented by general formula C), which does not contribute towards improving the transparency and flow ability. In this manner, the aforementioned would cause a situation in which improvement of the transparency and flow ability is reduced.

In order to avoid such a situation, it is preferable to arrange each of the openings of the pouring tubes apart from one another, in a stirring tank equipped with a batch stirring tank filled with an acidic solution, and pour (in some cases using "simultaneous pouring") the aforementioned aqueous solutions, while sufficiently stirring to ensure reaction of the tetrazo component and the coupler components in the acidic solution.

Additionally, the acidic solution may be removed from the stirring tank and circulated exteriorly, and the aqueous tetrazo solution and aqueous coupler solution may be poured, respectively, through this circulation line, or one solution may be poured through the circulation line while the other is poured into the stirring tank.

According to the present invention, the ratio of the total molar supply speed of the non-polar coupler component (I) and the polar coupler component (II) to the molar supply speed of the tetrazo component is not particularly limited. However, a disazo pigment composition is normally manufactured by means of the continuous pouring of the aforementioned components into an acidic solution to induce a coupling reaction, such that the ratio of the total molar supply speed of the non-polar coupler component (I) and the polar coupler component (II) to the molar supply speed of the tetrazo component ranges between 200:80 and 200:99, and preferably between 200:90 and 200:99.

Thereby, immediately after pouring the tetrazo component into the acidic solution, all of the tetrazo component is reacted with the coupler components, with no unreacted tetrazo compound remaining in the reaction system. As a result, side reactions of the tetrazo component such as decomposition and aggregation can be avoided, which in turn prevents smudging in the color.

The ratio of the molar supply speed does not have to be maintained at a constant rate throughout the reaction, and may be changed within the range of the aforementioned ratio of the molar supply speed, as pouring proceeds. Additionally, the start of pouring of the aqueous coupler solution may. precede that of the aqueous tetrazo solution. Furthermore, a surface active agent such as nonionic surface active agent, cationic surface active agent, anionic surface active agent, and rosin solution, may be poured in order to simultaneously treat the surface of resultant pigment particles.

As the aforementioned, when the tetrazo and coupler components are simultaneously poured according to the aforementioned molar ratio, none of the tetrazo component remains in the reaction system at the completion of pouring; however, a small amount of reactive coupler components still remain. Thus, after the aqueous coupler solution containing the non-polar coupler component (I) and the polar coupler component (II), and the aqueous tetrazo solution containing the tetrazo component of the benzidine are poured continuously into the acidic solution, only the aqueous tetrazo solution can be additionally poured thereafter.

For example, it is possible to increase the coupling reaction ratio Furthermore, by means of additionally pouring only the aqueous tetrazo solution after the completion of simultaneous pouring, and reacting it to the coupler components completely.

According to the present invention, pouring of the aqueous coupler solution containing the non-polar coupler components (I) and the polar coupler components (II) into the acidic solution is preferably performed under conditions wherein the non-polar coupler components (I) and the polar coupler components (II), which have been dissolved, are not precipitated, when the aqueous coupler solution and the acidic solution are mixed.

These conditions will change depending on numerous factors such as the type of the non-polar coupler components (I) and polar coupler components (II) to be reacted, concentration of the aqueous coupler solution, pouring manner, pH value and amount of the acidic solution. However, it is possible to determine the optimal amount for pouring either by experimentation, or by considering the coupling rate of the aqueous coupler solution, containing the non-polar coupler component (I) and polar coupler component (II), and the aqueous tetrazo solution, containing the tetrazo component of the benzidine, diffusion rate, and degree of dissolution in the acidic solution.

According to the present invention, from an operational and economic standpoint, it is preferable to pour the aqueous coupler solution at a total concentration of the non-polar coupler components (I) and the polar coupler components (II) of 0.1 to 1 mol/liter, and the aqueous tetrazo solution at a concentration of 0.05 to 0.8 mol/liter, into the acidic solution.

According to the present invention, the amount of the aqueous coupler solution and the aqueous tetrazo solution poured per minute into the acidic solution is not particularly limited; however, the amount of the aforementioned solutions poured per minute must be within a range in which the non-polar coupler components (I) and the polar coupler components (II) are not precipitated in the acidic solution.

This range in which the non-polar coupler components (I) and the polar coupler components (II) are not precipitated changes according to various conditions, such as the type, pH value, and amount of the acidic solution, degree of stirring, location of pouring, and the like. Additionally, determination of the amount of to be poured is also performed in consideration of the entire situation, i.e., the time required for production, and production processes.

In other words, a smaller pouring amount of the aqueous coupler solution, relative to the acidic solution, results in less precipitation of the non-polar coupler components (I) and the polar coupler components (II), but also results in a longer time period required to produce the pigment composition due to a lower concentration in the reaction system.

It is preferable to perform the pouring in the manner such that the ratio of the amount of the acidic solution to the pouring amount per minute of the aqueous coupler solution and the aqueous tetrazo solution falls within the range between 1000:1 and 1000:50.

According to the present invention, the reaction conditions, such as temperature and pH value during coupling, and the control method thereof, may be selected from the conventionally known values and methods, such that these conditions for a coupling reaction and control method thereof, are not particularly limited. The pH value and temperature may be changed with time and according to the pouring amount, or alternatively maintained at constant values throughout the reaction.

Furthermore, according to a preferred embodiment of the present invention, since the acidic aqueous tetrazo solution and the basic aqueous coupler solution are simultaneously poured, it is possible to perform a coupling reaction while maintaining the initial pH value until the end of the reaction, by means of adjusting the pH value and flow amount of each solution, such that the acid and base present in these solutions are neutralized.

The method for manufacturing the pigment composition according to the present invention is particularly effective in providing C. I. Pigment Yellow 12, 13, and 14, which surfaces are treated with pigment derivatives.

The resultant, pigment composition according to the present invention comprises, as essential components, a disazo pigment represented by general formula A, and an asymmetric disazo compound represented by general formula B, wherein said disazo pigment composition comprises 98.0 to 72.3% by weight of said disazo pigment and 2.0 to 27.8% by weight of disazo compounds; and said asymmetric disazo compound comprises at least 93 parts by weight, when the total weight of disazo compounds is 100 parts by weight.

The resultant disazo pigment composition in the acidic solution can be removed from the reaction system by means of continuous solid-liquid separation, or recovered from the reaction system by means of solid-liquid separation in batches after the completion of the reaction. Furthermore, in order to improve pigment properties of the resultant disazo pigment composition, a water-soluble inorganic salt such as aluminium sulfate, aluminium chloride, calcium chloride, and the like, may be added, or a series of treatments such as rosin treatment and the like can be performed, to manufacture a disazo pigment composition.

The disazo pigment composition, obtained according to the manufacturing method of the present invention, can be kneaded with a printing ink vehicle, and used as printing ink with a superior transparency and flow ability.

Offset ink vehicles are composed, for example, of resins such as rosin phenolic resins, petroleum resins, alkyd resins and dry oil resins thereof, vegetable oils such as linseed oil, tung oil and soybean oil if needed, and solvents such as n-paraffin, isoparaffin, aromatic hydrocarbons solvent, naphthene and α-olefin, of which the proportional mixture in parts by weight should preferably be within the range of resin : vegetable oil : solvent = 20-50 : 0-30 : 10-60.

The offset ink vehicle containing the disazo pigment composition of the present invention can be formed into a printing ink by suitably blending in commonly known additives such as ink solvents, driers, levelling agents and thickeners as needed.

Additionally, gravure ink vehicles are composed of resin mixtures such as gum rosin, wood rosin, tall oil rosin, coal rosin, lime rosin, rosin ester, maleic acid resin, gilsonite, dammar, shellac, polyamide resin, vinyl resin, nitrocellulose, cyclized rubber, chlorinated rubber, ethyl cellulose, cellulose acetate, ethylene-vinyl acetate copolymer resin, urethane resin, polyester resin and alkyd resin, and solvents such as n-hexane, toluene, ethanol, methanol, acetone, ethyl acetate, ethyl lactate, cellosolve, isopropyl alcohol, chlorobenzole, ethyl ether, acetal ethyl ether, ethyl acetoacetate and butyl acetate cellosolve, wherein the mixture proportion in parts by weight should preferably be within the range of resin mixture : solvent = 10-50 : 30-80.

The gravure ink vehicle containing the disazo pigment composition of the present invention can be formed into a printing ink by suitably blending in extender pigments such as barium sulfate, barium carbonate, calcium carbonate, gypsum, alumina white, clay, silica, silica white, talc, calcium silicate and sedimentary magnesium carbonate as needed, as well as plasticizers, anti-UV agents, anti-oxidants and anti-static agents as adjuvants.

### Examples

Hereinbelow, the present invention shall be explained in further detail by means of the examples, comparative examples and test examples; however, the present invention should not be construed as being limited by these examples. Additionally, the "parts" and "%" as used in the following examples always signify "parts by weight" or "% by weight" where there are no statements to the contrary.

### Example 1

A 0.125 mol/liter tetrazo solution at 5°C was prepared by means of blending 3,3-dichlorobenzidine hydrochloride salt with molar amounts of hydrochloric acid and sodium nitrite equal to three times and twice that of the 3,3-dichlorobenzidine hydrochloride, respectively. On the other hand, 339.8 parts of acetoacetanilide and 17.7 parts of 3-acetoacetylamino benzoic acid were dissolved in an aqueous solution comprising 120 parts of sodium hydroxide to prepare a 0.259 mol/liter aqueous coupler solution at 20°C.

In addition, as an acidic aqueous solution, 5000 g of a buffer solution (pH 4.7) at 20°C was prepared by blending 300 g of 80% acetic acid, 80 g of sodium hydroxide, and water in a stirring vessel equipped with a stirrer.

Subsequently, the aforementioned tetrazo solution and coupler solution were respectively poured into the buffer solution via two pouring pipes, each respectively possessing an outlet which were positioned apart from one another. The pouring of these solutions was simultaneously commenced and completed after 40 minutes by means of a quantitative pump at an identical volume flow rate (193 ml/min) (molar supply speed ratio: coupler component / tetrazo component = approximately 200 / 96.5).

During the pouring, there was no detection of the tetrazo component from the reaction liquid collected from the liquid surface. Thereafter, only the aqueous tetrazo solution was poured until a minute amount of the tetrazo component was detected in the reaction system. Furthermore, the detection of the tetrazo component was conducted by means of a color forming reaction using β-naphthol.

After heating to a temperature of 60°C, the reaction mixture was filtered and washed with water to yield a wet pigment composition (Pigment Invention 1) containing a disazo pigment composition.

A portion of this wet pigment composition was then dried and measured in the mass spectrometer, yielding peaks at m/z = 628 corresponding to the disazo pigment (Formula 1-A) and m/z = 672 corresponding to the asymmetric disazo compound (Formula 1-B) comprising a polar coupling component and non-polar coupling component; however, a peak at m/z = 716 corresponding to the symmetric disazo compound (Formula 1-C) comprising two polar coupling components was notably absent.

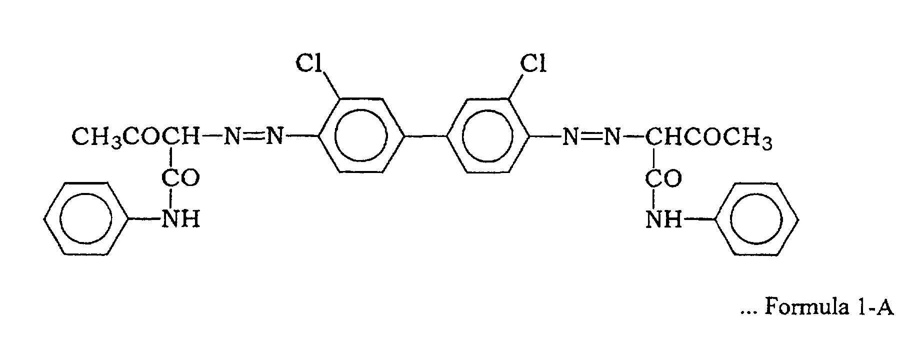

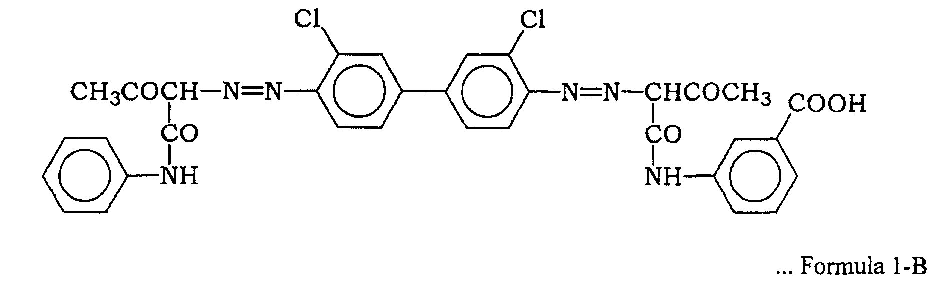

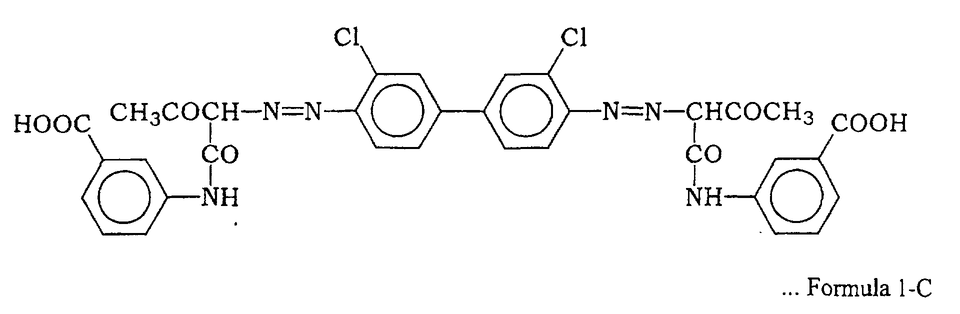

### Synthesis Example 1

A tetrazo solution of 3,3-dichlorobenzidine hydrochloride was obtained by means of blending and stirring 38.2 parts of 3,3-dichlorobenzidine hydrochloride, 85 parts of 35% hydrochloric acid, and 800 parts of water, and then adding 21.9 parts of sodium nitrite in an ice bath. Subsequently, while stirring, a dispersed mixture, which was formed by dispersing 33.4 parts of 3-acetoacetylamino benzoic acid into 250 parts of water, was added dropwise to the tetrazo solution over the course of 2 hours, followed by an additional one hour of stirring to yield an orange-colored slurry.

After dissolving 26.8 parts of acetoacetanilide into an aqueous solution comprising 30.6 parts of sodium hydroxide and 600 parts of water, a solution containing 52.1 parts acetic acid diluted with 200 parts of water was added dropwise thereto over the course of an hour to precipitate out the crystals. This was subsequently cooled to 5 to 10°C, followed by the dropwise addition of the aforementioned orange-colored slurry over 2 hours while stirring.

Stirring was then continued for an additional one hour to produce an aqueous suspension containing the disazo compound corresponding to the asymmetric disazo compound (Formula 1-B) comprising a polar coupling component and a non-polar coupling component (Aqueous Suspension 1).

A portion of the resultant suspension was then filtered, washed with water, dried and measured in the mass spectrometer, yielding a peak at m/z = 672 corresponding to the asymmetric disazo compound (Formula 1-B) comprising a polar coupling component and non-polar coupling component, with the other peaks being very small.

### Comparative Example 1-1: Method for Manufacturing a Disazo Pigment Composition

A 0.125 mol/liter tetrazo solution at 5°C was prepared by means of blending 3,3-dichlorobenzidine hydrochloride with molar amounts of hydrochloric acid and sodium nitrite respectively equal to three times and twice that of the 3,3-dichlorobenzidine hydrochloride. On the other hand, 354 parts of acetoacetanilide were dissolved in an aqueous solution comprising 120 parts of sodium hydroxide to prepare a 0.259 mol/liter aqueous coupler solution at 20°C.

In addition, as an acidic aqueous solution, 5000 g of a buffer solution (pH 4.7) at 20°C was prepared by blending 300 g of 80% acetic acid, 80 g of sodium hydroxide, and water in a stirring vessel equipped with a stirrer.

Subsequently, the aforementioned tetrazo solution and coupler solution were respectively poured into the buffer solution via two pouring pipes each respectively possessing an outlet, which were positioned apart from one another. The pouring of these solutions was simultaneously commenced and completed after 40 minutes by means of a quantitative pump at an identical volume flow rate (193 ml/min).
During the pouring, there was no detection of the tetrazo component from the reaction liquid collected from the liquid surface. Thereafter, only the aqueous tetrazo solution was poured, until a minute amount of the tetrazo component was detected in the reaction system, to obtain a disazo pigment suspension (A1). Furthermore, the detection of the tetrazo component was conducted by means of a color forming reaction using β-naphthol.

A portion of the resultant suspension was then filtered, washed with water, dried and measured in the mass spectrometer, yielding a peak at m/z = 628 corresponding to the disazo pigment (Formula 1-A); however, peaks were notably absent at m/z = 672 corresponding to the asymmetric disazo compound (Formula 1-B) comprising a polar coupling component and non-polar coupling component, and m/z = 716 corresponding to the symmetric disazo compound (Formula 1-C) comprising two polar coupling components.

The present pigment corresponded to a pigment disclosed in WO97/31067.

The aqueous suspension (Aqueous Suspension 1) containing 50 parts of the disazo compound corresponding to the asymmetric disazo compound (Formula 1-B), comprising a polar coupling component and a non-polar coupling component, obtained in Synthesis Example 1, was then added to the disazo pigment suspension (A1) obtained according to the aforementioned method.

After heating to a temperature of 60°C, the suspension mixture was filtered and washed with water to yield a wet pigment composition containing a disazo pigment composition (Comparative Pigment 1-1). This disazo pigment composition corresponded to a disazo pigment composition disclosed in Japanese Patent Application, First Publication No. Sho 63-178169.

### Comparative Example 1-2: Method for Manufacturing a Disazo Pigment Composition

A 0.125 mol/liter tetrazo solution at 5°C was prepared by means of blending 3,3-dichlorobenzidine hydrochloride with molar amounts of hydrochloric acid and sodium nitrite respectively equal to three times and twice that of the 3,3-dichlorobenzidine hydrochloride. On the other hand, 339.8 parts of acetoacetanilide and 17.7 parts of 3-acetoacetylamino benzoic acid were dissolved in an aqueous solution comprising 144 parts of sodium hydroxide to prepare a 0.259 mol/liter aqueous coupler solution at 20°C.

In addition, as an acidic aqueous solution, 5000 g of a buffer solution (pH 4.7) at 20°C was prepared by blending 300 g of 80% acetic acid, 80 g of sodium hydroxide, and water in a stirring vessel equipped with a stirrer.

Subsequently, the aqueous coupler solution was poured for 40 minutes into the aforementioned acetic acid solution at a volume flow rate of 193 ml/min to precipitate the coupler. A pouring tube having an outlet was set into this coupler slurry, and the aqueous tetrazo solution was then poured therein at a volume flow rate of 184 ml/min. The pouring was continued for approximately 40 minutes, until a minute amount of the tetrazo component was detected in the reaction system. Furthermore, the detection of the tetrazo component was conducted by means of a color forming reaction using β-naphthol.

After heating to a temperature of 60°C, the slurry was filtered and washed with water to yield a wet pigment composition containing a disazo pigment composition (Comparative Pigment 1-1).

A portion of the wet pigment composition was then dried and measured in the mass spectrometer, yielding peaks at m/z = 628 corresponding to the disazo pigment (Formula 1-A), m/z = 672 corresponding to the asymmetric disazo compound (Formula 1-B) comprising a polar coupling component and non-polar coupling component, and m/z = 716 corresponding to the symmetric disazo compound (Formula 1-C) comprising two polar coupling components. The ratio of the peak strengths of the asymmetric disazo compound (Formula 1-B) to the symmetric disazo compound (Formula 1-C) was 85:15.

This disazo pigment composition corresponded to a disazo pigment composition disclosed in Japanese Patent Application, Second Publication No. Sho 55-49087.

### Test Example 1

According to the following method, the wet pigment composition obtained in Example 1 (Pigment Invention 1), the wet pigment composition obtained in Comparative Example 1-1 (Comparative Pigment 1-1), and the wet pigment composition obtained in Comparative Example 1-2 (Comparative Pigment 1-2) were formed into inks.

After adding 300 parts of a lithographic ink varnish (a varnish containing rosin phenolic resin manufactured by Dainippon Ink and Chemicals) to a flusher heated to 50°C, a wet pigment composition was added in an amount corresponding to 100 parts when converting for the solid content of the pigment composition, and the resultant mixture was flushed while kneading for 30 minutes. After removing the free water, the flusher temperature was raised to 75°C while vacuum dehydrating in order to remove the water content. After confirming that the water content had been removed, 170 parts of the lithographic ink varnish (a varnish containing rosin phenolic resin manufactured by Dainippon Ink and Chemicals) and 30 parts of light oil were gradually added to obtain a test ink.

The transparency and flow ability of the test inks prepared by the above method were measured, and the results are shown in Table 1.

### Evaluation Method for the Glass Plate Flow Ability

The flow ability on a glass plate was evaluated by lightly mixing and applying a test ink to the higher end of a glass plate which was inclined to an angle of 70°, allowing the test ink to sit for one hour, and then measuring the distance to the leading edge of the ink which had run towards the lower end. High measured values for the glass plate flow ability indicate a high flow ability. Furthermore, the measured values for the wet pigment compositions obtained above are displayed as a percentage with the wet pigment composition obtained in each Example (Pigment Invention) designated as 100%.

### Evaluation Method for the Transparency

The test ink was transferred to white transfer paper onto which a black band was printed using black ink, and the transfer state on the black band was evaluated by observation. A black band which appeared white due to the transfer of test ink onto the black band was judged to be opaque, and given a score of 1. In contrast, cases in which it was difficult to discern whether or not the test ink had been transferred to the black band, were judged as transparent, and given a score of 10.

**TABLE 1**

| Wet pigment composition | Glass plate flow ability | Transparency |
|---|---|---|
| Pigment Invention 1 | 100% | 9 |
| Comparative Pigment 1-1 | 60% | 3 |
| Comparative Pigment 1-2 | 45% | 5 |

### Example 2

A wet pigment composition (Pigment Invention 2) containing a disazo pigment was obtained in the same manner as in Example 1, with the exception that 329.2 parts of acetoacetanilide and 33.2 parts of 5-acetoacetylamino-2-hydroxy benzoic acid were used in place of the 339.8 parts of acetoacetanilide and 17.7 parts of 3-acetoacetylamino benzoic acid used in Example 1.

A portion of this wet pigment composition was then dried and measured in the mass spectrometer, yielding peaks at m/z = 628 corresponding to the disazo pigment (Formula 2-A), and m/z = 688 corresponding to the asymmetric disazo compound (Formula 2-B) comprising a polar coupling component and non-polar coupling component; however, a peak at m/z = 748 corresponding to the symmetric disazo compound (Formula 2-C) comprising two polar coupling components was notably absent.

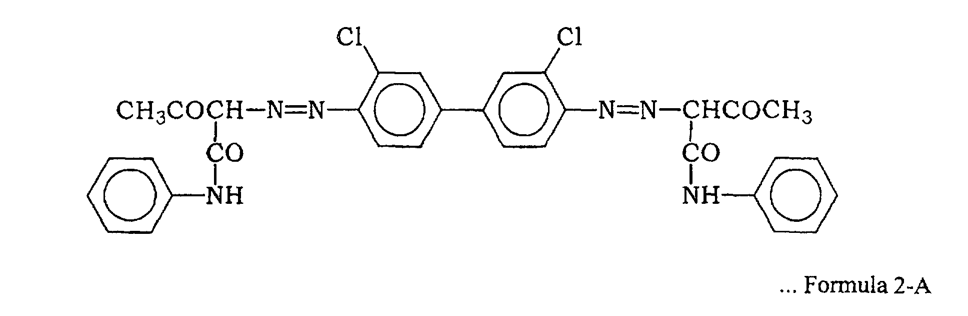

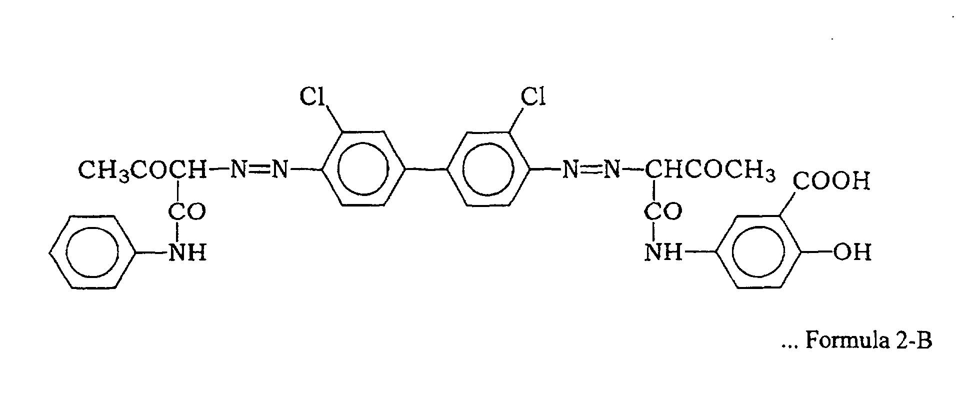

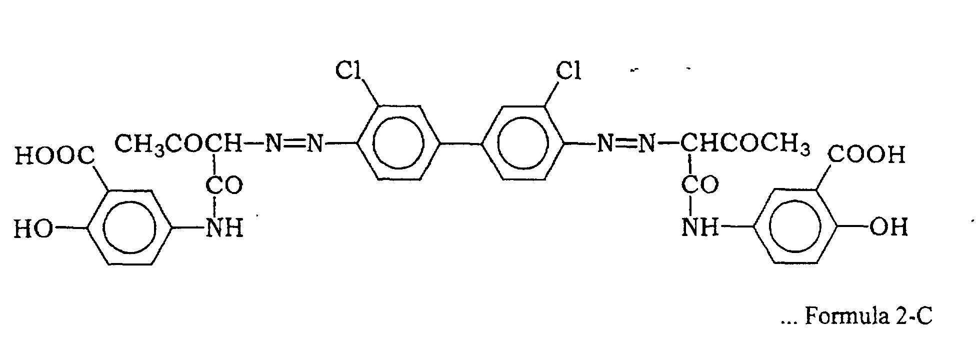

### Synthesis Example 2

An aqueous suspension (aqueous suspension 2) containing the disazo compound corresponding to the asymmetric disazo compound (Formula 2-B) comprising a polar coupling component and a non-polar coupling component was obtained in the same manner as in Synthesis Example 1, with the exception that 35.8 parts of 5-acetoacetylamino-2-hydroxy benzoic acid were used in place of the 33.4 parts of 3-acetoacetylamino benzoic acid used in Synthesis Example 1.

A portion of this aqueous suspension was then filtered, washed with water, dried and measured in the mass spectrometer, yielding a peak at m/z = 688 corresponding to the asymmetric disazo compound (Formula 2-B) comprising a polar coupling component and non-polar coupling component, with the other peaks being very small.

### Comparative Example 2-1: Method for Manufacturing a Disazo Pigment Composition

A disazo pigment composition (Comparative Pigment 2-1) containing a disazo pigment was obtained in the same manner as in Comparative Example 1-1, with the exception that an aqueous suspension (Aqueous Suspension 2) containing 88 parts of the disazo compound corresponding to the asymmetric disazo compound (Formula 2-B), comprising a polar coupling component and a non-polar coupling component, was used in place of the aqueous suspension (Aqueous Suspension 1) containing 50 parts of the disazo compound corresponding to the asymmetric disazo compound (Formula 1-B), comprising a polar coupling component and a non-polar coupling component, obtained in Synthesis Example 1. This disazo compound corresponded to a disazo pigment composition disclosed in Japanese Patent Application, First Publication No. Sho 63-178169.

### Comparative Example 2-2: Method for Manufacturing a Disazo Pigment Composition

A disazo pigment composition (Comparative Pigment 2-2) containing a disazo pigment was obtained in the same manner as in Comparative Example 1-2, with the exception that 329.2 parts of acetoacetanilide and 33.2 parts of 5-acetoacetylamino-2-hydroxy benzoic acid were used in place of 339.8 parts of acetoacetanilide and 17.7 parts of 3-acetoacetylamino benzoic acid.

A portion of the wet pigment composition was then dried and measured in the mass spectrometer, yielding peaks at m/z = 628 corresponding to the disazo pigment (Formula 2-A), m/z = 688 corresponding to the asymmetric disazo compound (Formula 2-B) comprising a polar coupling component and non-polar coupling component, and m/z = 748 corresponding to the symmetric disazo compound (Formula 2-C) comprising two polar coupling components. The ratio of the peak strengths of the asymmetric disazo compound (Formula 2-B) to the symmetric disazo compound (Formula 2-C) was 90:10.

This disazo pigment composition corresponded to a disazo pigment composition disclosed in Japanese Patent Application, Second Publication No. Sho 55-49087.

### Test Example 2

In the same manner as in Test Example 1, the wet pigment composition obtained in Example 2 (Pigment Invention 2), the wet pigment composition obtained in Comparative Example 2-1 (Comparative Pigment 2-1), and the wet pigment composition obtained in Comparative Example 2-2 (Comparative Pigment 2-2) were formed into inks.

The transparency and flow ability of each test ink prepared by the aforementioned method were measured, and these results are shown in Table 2.

**TABLE 2**

| Wet pigment composition | Glass plate flow ability | Transparency |
|---|---|---|
| Pigment Invention 2 | 100% | 9 |
| Comparative Pigment 2-1 | 55% | 3 |
| Comparative Pigment 2-2 | 45% | 6 |

### Example 3

A wet pigment composition (Pigment Invention 3) containing a disazo pigment was prepared in the same manner as in Example 2 with the exception that after heating to 60°C and adding a solution of rosin dissolved in sodium hydroxide (solid content of rosin = 30 parts), 33 parts of aluminium sulfate were added thereto.

### Comparative Example 3-1: Method for Manufacturing a Disazo Pigment Composition

A wet pigment composition (Comparative Pigment 3-1) containing a disazo pigment was obtained in the same manner as in Comparative Example 2-1, with the exception that after heating to 60°C and adding a solution of rosin dissolved in sodium hydroxide (solid content of rosin = 30 parts), 33 parts of aluminium sulfate were added thereto.

This disazo pigment composition corresponded to the disazo pigment composition disclosed in Japanese Patent Application, First Publication No. Sho 63-178169.

### Comparative Example 3-2: Method for Manufacturing a Disazo Pigment Composition

A wet pigment composition (Comparative Pigment 3-2) containing a disazo pigment was obtained in the same manner as in Comparative Example 2-2, with the exception that after heating to 60°C and adding a solution of rosin dissolved in sodium hydroxide (solid content of rosin = 30 parts), 33 parts of aluminium sulfate were added thereto.

This disazo pigment composition corresponded to the disazo pigment composition disclosed in Japanese Patent Application, First Publication No. Sho 55-49087.

### Test Example 3

In the same manner as in Test Example 1, the wet pigment composition obtained in Example 3 (Pigment Invention 3), the wet pigment composition obtained in Comparative Example 3-1 (Comparative Pigment 3-1), and the wet pigment composition obtained in Comparative Example 3-2 (Comparative Pigment 3-2) were formed into inks.

The transparency and flow ability of each test ink prepared by the aforementioned method were measured, and these results are shown in Table 3.

**TABLE 3**

| Wet pigment composition | Glass plate flow ability | Transparency |
|---|---|---|
| Pigment Invention 3 | 100% | 10 |
| Comparative Pigment 3-1 | 45% | 3 |
| Comparative Pigment 3-2 | 45% | 5 |

### Example 4

A 0.110 mol/liter tetrazo solution at 5°C was prepared by means of blending 3,3-dichlorobenzidine hydrochloride with molar amounts of hydrochloric acid and sodium nitrite equal to three times and twice that of the 3,3-dichlorobenzidine hydrochloride, respectively, according to a conventional method. On the other hand, 389.5 parts of acetoacet-m-xylidide and 22.1 parts of 2-acetoacetylamino benzoic acid were dissolved in an aqueous solution comprising 120 parts of sodium hydroxide to prepare a 0.237 mol/liter aqueous coupler solution at 20°C.

In addition, as an acidic aqueous solution, 6000 g of a buffer solution (pH 4.7) at 20°C was prepared by blending 300 g of 80% acetic acid, 80 g of sodium hydroxide, and water in a stirring vessel equipped with a stirrer.

Subsequently, the aforementioned tetrazo solution and coupler solution were respectively poured into the buffer solution via two pouring pipes each respectively possessing an outlet, which were positioned apart from one another. The pouring of these solutions was simultaneously commenced and completed after 80 minutes by means of a quantitative pump at an identical volume flow rate (105.5 ml/min) (molar supply speed ratio: coupler component / tetrazo component = approximately 200 / 92.8).

During the pouring, there was no detection of the tetrazo component from the reaction liquid collected from the liquid surface. Thereafter, only the aqueous tetrazo solution was poured until a minute amount of the tetrazo component was detected in the reaction system. Furthermore, the detection of the tetrazo component was conducted by means of a color forming reaction using β-naphthol.

After heating to a temperature of 90°C, the reaction mixture was filtered, washed with water, dried, and ground to yield a powder pigment composition containing a disazo pigment composition (Pigment Invention 4).

This powder pigment composition was then measured in the mass spectrometer, yielding peaks at m/z = 684 corresponding to the disazo pigment (Formula 4-A), m/z = 700 corresponding to the asymmetric disazo compound (Formula 4-B) comprising a polar coupling component and non-polar coupling component, however, a peak at m/z = 716 corresponding to the symmetric disazo compound (Formula 4-C) comprising two polar coupling components was notably absent..

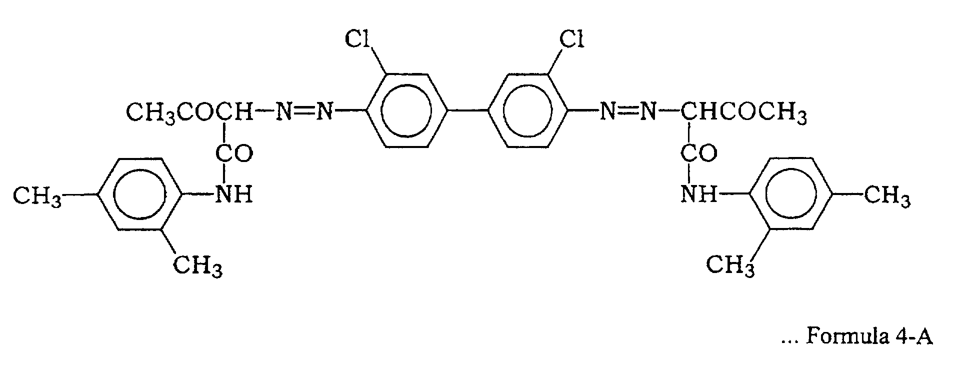

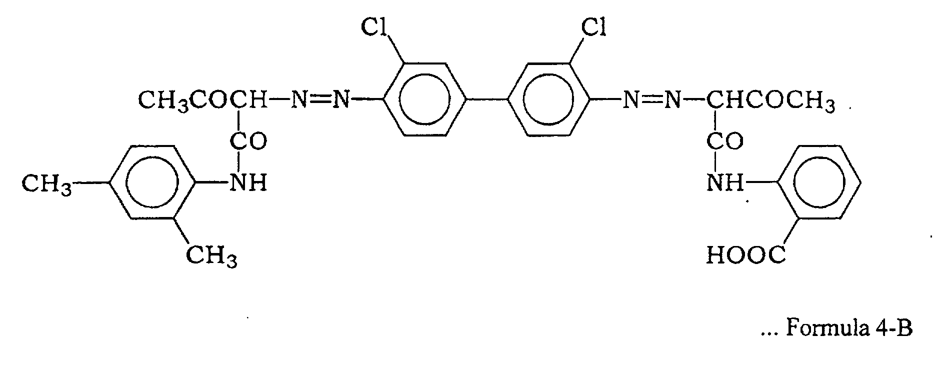

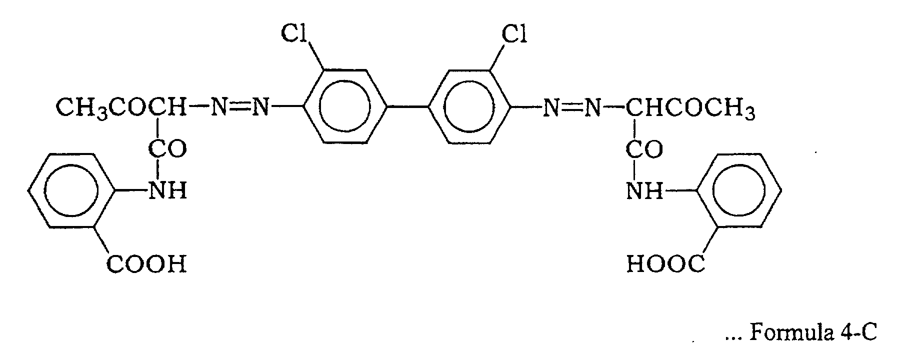

### Synthesis Example 4

An aqueous suspension (Aqueous Suspension 4) containing the disazo compound corresponding to the asymmetric disazo compound (Formula 4-B) comprising a polar coupling component and a non-polar coupling component was obtained in the same manner as in Synthesis Example 1, with the exception that 33.4 parts of 2-acetoacetylamino benzoic acid were used in place of the 33.4 parts of 3-acetoacetylamino benzoic acid, and 31.0 parts of acetoacet-m-xylidide were used in place of the 26.8 parts of acetoacetanilide used in Synthesis Example 1.

A portion of this aqueous suspension was then filtered, washed with water, dried and measured in the mass spectrometer, yielding a peak at m/z = 700 corresponding to the asymmetric disazo compound (Formula 4-B) comprising a polar coupling component and non-polar coupling component, with the other peaks being very small.

### Comparative Example 4-1: Method for Manufacturing a Disazo Pigment Composition

A 0.110 mol/liter tetrazo solution at 5°C was prepared by means of blending 3,3-dichlorobenzidine hydrochloride with molar amounts of hydrochloric acid and sodium nitrite equal to three times and twice that of the 3,3-dichlorobenzidine hydrochloride, respectively, according to a conventional method. On the other hand, 410 parts of acetoacet-m-xylidide were dissolved in an aqueous solution comprising 120 parts of sodium hydroxide to prepare a 0.237 mol/liter aqueous coupler solution at 20°C.

In addition, as an acidic aqueous solution, 6000 g of a buffer solution (pH 4.7) at 20°C was prepared by blending 300 g of 80% acetic acid, 80 g of sodium hydroxide, and water in a stirring vessel equipped with a stirrer.

Subsequently, the aforementioned tetrazo solution and coupler solution were respectively poured into the buffer solution via two pouring pipes each respectively possessing an outlet, which were positioned apart from one another. The pouring of these solutions was simultaneously commenced and completed after 80 minutes by means of a quantitative pump at an identical volume flow rate (105.5 ml/min). During the pouring, there was no detection of the tetrazo component from the reaction liquid collected from the liquid surface. Thereafter, only the aqueous tetrazo solution was poured until a minute amount of the tetrazo component was detected in the reaction system, to obtain a disazo pigment suspension (A1). Furthermore, the detection of the tetrazo component was conducted by means of a color forming reaction using β-naphthol.

A portion thereof was then filtered, washed with water, dried and measured in the mass spectrometer, yielding a peak at m/z = 684 corresponding to the disazo pigment (Formula 4-A); however, peaks were notably absent at m/z = 700 corresponding to the asymmetric disazo compound (Formula 4-B) comprising a polar coupling component and non-polar coupling component, and m/z = 716 corresponding to the symmetric disazo compound (Formula 4-C) comprising two polar coupling components.

The present pigment corresponded to a pigment disclosed in WO97/31067.

The aqueous suspension (Aqueous Suspension 4) containing 68 parts of the disazo compound corresponding to the asymmetric disazo compound (Formula 4-B), comprising a polar coupling component and a non-polar coupling component, obtained in Synthesis Example 4, was then added to the disazo pigment suspension (A4) obtained according to the aforementioned method.

After heating to a temperature of 90°C, the suspension mixture was filtered and washed with water, dried, and ground to yield a powder pigment composition containing a disazo pigment composition (Comparative Pigment 4-1). This disazo pigment composition corresponded to a disazo pigment composition disclosed in Japanese Patent Application, First Publication No. Sho 63-178169.

### Comparative Example 4-2: Method for Manufacturing a Disazo Pigment Composition

A 0.110 mol/liter tetrazo solution at 5°C was prepared by means of blending 3,3-dichlorobenzidine hydrochloride with molar amounts of hydrochloric acid and sodium nitrite respectively equal to three times and twice that of the 3,3-dichlorobenzidine hydrochloride. On the other hand, 389.5 parts of acetoacet-m-xylidide and 22.1 parts of 2-acetoacetylamino benzoic acid were dissolved in an aqueous solution comprising 144 parts of sodium hydroxide to prepare a 0.237 mol/liter aqueous coupler solution at 20°C.

In addition, as an acidic aqueous solution, 6000 g of a buffer solution at 20°C was prepared by blending 300 g of 80% acetic acid and water in a stirring vessel equipped with a stirrer.

Subsequently, the aqueous coupler solution was poured for 80 minutes into the aforementioned acetic acid solution at a volume flow rate of 105.5 ml/min to precipitate the coupler. A pouring tube having an outlet was set into this coupler solution, and the aqueous tetrazo solution was then poured therein at a volume flow rate of 105.5 ml/min. The pouring was continued for approximately 80 minutes, until a minute amount of the tetrazo component was detected in the reaction system. Furthermore, the detection of the tetrazo component was conducted by means of a color forming reaction using β-naphthol.

After heating to a temperature of 90°C, the slurry was filtered, washed with water, dried, and ground to yield a powder pigment composition (Comparative Pigment 4-2) containing a disazo pigment composition.

A portion of the resultant powder was then measured in the mass spectrometer, yielding peaks at m/z = 684 corresponding to the disazo pigment (Formula 4-A), m/z = 700 corresponding to the asymmetric disazo compound (Formula 4-B) comprising a polar coupling component and non-polar coupling component, and m/z = 716 corresponding to the symmetric disazo compound (Formula 4-C) comprising two polar coupling components. The ratio of the peak strengths of the asymmetric disazo compound (Formula 4-B) to the symmetric disazo compound (Formula 4-C) was 90:10.

This disazo pigment composition corresponded to a disazo pigment composition disclosed in Japanese Patent Application, Second Publication No. Sho 55-49087.

### Test Example 4

According to the following method, the powder pigment composition obtained in Example 4 (Pigment Invention 4), the powder pigment composition obtained in Comparative Example 4-1 (Comparative Pigment 4-1), and the powder pigment composition obtained in Comparative Example 4-2 (Comparative Pigment 4-2) were formed into inks.

After adding 300 parts of a lithographic ink varnish (a varnish containing rosin phenolic resin manufactured by Dainippon Ink and Chemicals) to a stainless steel vessel heated to 50°C, 100 parts of a powder pigment composition were added thereto, and the resultant mixture was mixed using a lab mixer to prepared a mill base. This mill base was milled by using a triple roll mill to prepare a base ink. In the triple roll mill, 185 parts of the lithographic ink varnish (a varnish containing rosin phenolic resin manufactured by Dainippon Ink and Chemicals) and 15 parts of light oil were gradually added to the base ink to prepare a test ink.

The transparency and flow ability of the test inks prepared by the above method were measured, and the results are shown in Table 4.

**TABLE 4**

| Powder pigment composition | Glass plate flow ability | Transparency |
|---|---|---|
| Pigment Invention 4 | 100% | 5 |
| Comparative Pigment 4-1 | 65% | 1 |
| Comparative Pigment 4-2 | 55% | 2 |

### Example 5

A 0.145 mol/liter tetrazo solution at 5°C was prepared by means of blending 3,3-dichlorobenzidine hydrochloride with molar amounts of hydrochloric acid and sodium nitrite equal to three times and twice that of the 3,3-dichlorobenzidine hydrochloride, respectively, according to a conventional method. On the other hand, 374.4 parts of acetoacet-o-toluidide and 11.8 parts of 4-acetoacetylaminobenzene sulfonate potassium salt were dissolved in an aqueous solution comprising 120 parts of sodium hydroxide to prepare a 0.300 mol/liter aqueous coupler solution at 20°C.

In addition, as an acidic aqueous solution, 6000 g of a buffer solution (pH 4.7) at 20°C was prepared by blending 300 g of 80% acetic acid, 80 g of sodium hydroxide, and water in a stirring vessel equipped with a stirrer.

Subsequently, the aforementioned tetrazo solution and coupler solution were respectively poured into the buffer solution via two pouring pipes each respectively possessing an outlet, which were positioned apart from one another. The pouring of these solutions was simultaneously commenced and completed after 90 minutes by means of a quantitative pump at an identical volume flow rate (74.1 ml/min) (molar supply speed ratio: coupler component / tetrazo component = approximately 200 / 96.7).

During the pouring, there was no detection of the tetrazo component from the reaction liquid collected from the liquid surface. Thereafter, only the aqueous tetrazo solution was poured until a minute amount of the tetrazo component was detected in the reaction system. Furthermore, the detection of the tetrazo component was conducted by means of a color forming reaction using β-naphthol.

After heating to a temperature of 90°C, the reaction mixture was filtered, washed with water, dried, and ground to yield a powder pigment composition containing a disazo pigment composition (Pigment Invention 5).

This powder pigment composition contained the disazo pigment (Formula 5-A), and the asymmetric disazo compound (Formula 5-B), comprising a polar coupling component and non-polar coupling component.

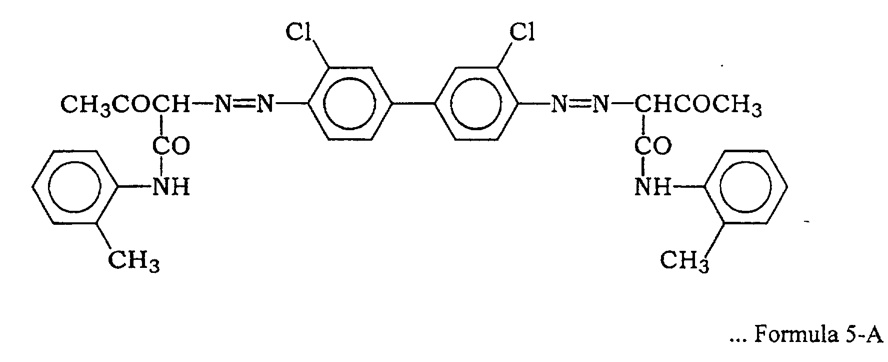

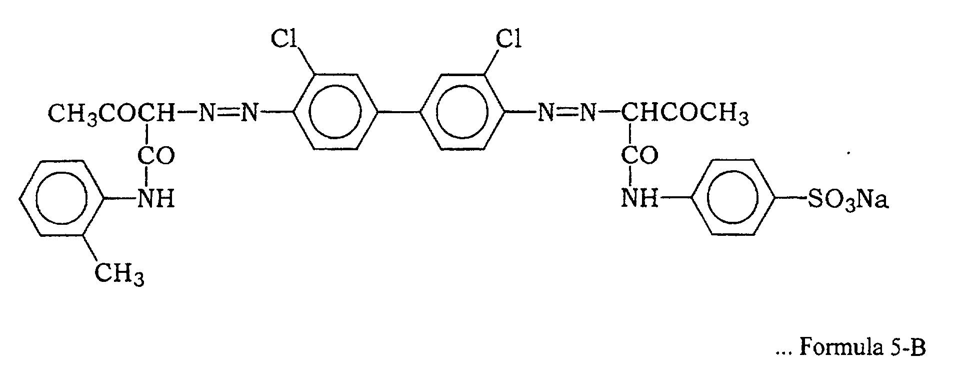

### Synthesis Example 5

An aqueous suspension (Aqueous Suspension 5) containing the disazo compound corresponding to the asymmetric disazo compound (Formula 5-B) comprising a polar coupling component and a non-polar coupling component was obtained in the same manner as in Synthesis Example 1, with the exception that 44.6 parts of 4-acetoacetylaminobenzene sulfonic acid were used in place of the 33.4 parts of 3-acetoacetylamino benzoic acid, and 28.9 parts of acetoacet-o-toluidide were used in place of the 26.8 parts of acetoacetanilide used in Synthesis Example 1.

### Comparative Example 5-1: Method for Manufacturing a Disazo Pigment Composition

A 0.145 mol/liter tetrazo solution at 5°C was prepared by means of blending 3,3-dichlorobenzidine hydrochloride with molar amounts of hydrochloric acid and sodium nitrite equal to three times and twice that of the 3,3-dichlorobenzidine hydrochloride, respectively, according to a conventional method. On the other hand, 382 parts of acetoacet-o-toluidide were dissolved in an aqueous solution comprising 120 parts of sodium hydroxide to prepare a 0.300 mol/liter aqueous coupler solution at 20°C.

In addition, as an acidic aqueous solution, 6000 g of a buffer solution (pH 4.7) at 20°C was prepared by blending 300 g of 80% acetic acid, 80 g of sodium hydroxide, and water in a stirring vessel equipped with a stirrer.

Subsequently, the aforementioned tetrazo solution and coupler solution were respectively poured into the buffer solution via two pouring pipes each respectively possessing an outlet, which were positioned apart from one another. The pouring of these solutions was simultaneously commenced and completed after 90 minutes by means of a quantitative pump at an identical volume flow rate (74.1 ml/min), to obtain a disazo pigment suspension (A5). During the pouring, there was no detection of the tetrazo component from the reaction liquid collected from the liquid surface. Furthermore, the detection of the tetrazo component was conducted by means of a color forming reaction using β-naphthol.

The present pigment corresponded to a pigment disclosed in WO97/31067.

The aqueous suspension (aqueous suspension 5) containing 66 parts of the disazo compound corresponding to the asymmetric disazo compound (Formula 5-B), comprising a polar coupling component and a non-polar coupling component, obtained in Synthesis Example 5, was then added to the disazo pigment suspension (A5) obtained according to the aforementioned method.

After heating to a temperature of 90°C, the suspension mixture was filtered, washed with water, dried, and ground to yield a powder pigment composition containing a disazo pigment composition (Comparative Pigment 5-1). This disazo pigment composition corresponded to a disazo pigment composition disclosed in Japanese Patent Application, First Publication No. Sho 63-178169.

### Comparative Example 5-2: Method for Manufacturing a Disazo Pigment Composition

A 0.145 mol/liter tetrazo solution at 5°C was prepared by means of blending 3,3-dichlorobenzidine hydrochloride with molar amounts of hydrochloric acid and sodium nitrite respectively equal to three times and twice that of the 3,3-dichlorobenzidine hydrochloride. On the other hand, 374.4 parts of acetoacet-o-toluidide and 11.8 parts of a potassium salt of 2-acetoacetylaminobenzene sulfonic acid were dissolved in an aqueous solution comprising 144 parts of sodium hydroxide to prepare a 0.300 mol/liter aqueous coupler solution at 20°C.

In addition, as an acidic aqueous solution, 6000 g of an acetic acid solution at 20°C was prepared by blending 300 g of 80% acetic acid and water in a stirring vessel equipped with a stirrer.

Subsequently, the aqueous coupler solution was poured for 90 minutes into the aforementioned acetic acid solution at a volume flow rate of 74.1 ml/min to precipitate the coupler. A pouring tube having an outlet was set into this coupler slurry, and the aqueous tetrazo solution was then poured therein at a volume flow rate of 74.1 ml/min. The pouring was continued for approximately 90 minutes, until a minute amount of the tetrazo component was detected in the reaction system. Furthermore, the detection of the tetrazo component was conducted by means of a color forming reaction using β-naphthol.

After heating to a temperature of 90°C, the slurry was filtered, washed with water, dried, and ground to yield a powder pigment composition (Comparative Pigment 5-2) containing a disazo pigment composition.

The resultant powder contained the disazo pigment (Formula 5-A), the asymmetric disazo compound (Formula 5-B), comprising a polar coupling component and non-polar coupling component, and the symmetric disazo compound (Formula 5-C) comprising two polar coupling components.

This disazo pigment composition corresponded to a disazo pigment composition disclosed in Japanese Patent Application, Second Publication No. Sho 55-49087.

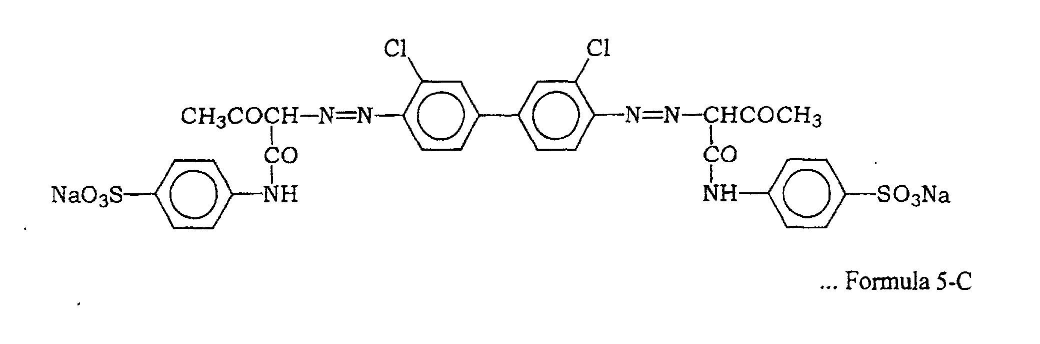

### Test Example 5

According to the following method, the powder pigment composition obtained in Example 5 (Pigment Invention 5), the powder pigment composition obtained in Comparative Example 5-1 (Comparative Pigment 5-1), and the powder pigment composition obtained in Comparative Example 5-2 (Comparative Pigment 5-2) were formed into inks.
20 parts of the powder pigment composition, 60 parts of a vehicle containing nitrocellulose used for gravure ink, 80 parts of a mixed solvent (toluene: ethylacetate: isopropyl alcohol = 60:20:10), and 300 parts of steel beads were placed in a container, and milled for 60 minutes using a dispersing device (paint conditioner). Subsequently, 80 parts of a vehicle containing a polyamide resin used for gravure ink were added thereto to prepare a test ink.
The transparency and flow ability of each test ink prepared according to the aforementioned method were measured, and these results are shown in Table 5.

### Method for Evaluating the Flow Ability

The flow ability characteristics of the test inks were measured using a Brookfield type (B-type) viscometer. A low value measured by the aforementioned viscometer indicates a high flow ability. Furthermore, the measured values for the wet pigment compositions obtained above are displayed as a percentage with the powder pigment composition obtained in each Example (i.e., Pigment Inventions) designated as 100%.

### Evaluation Method for the Transparency

The test ink was transferred to acetate film using a bar coater. A sheet of black paper was adhered to the back side of the acetate film, and the appearance of the black paper sheet was evaluated by observation.
If the black paper sheet appeared white from the transfer film, the ink was judged to be opaque, and given a score of 1. In contrast, cases in which the black paper sheet appeared clearly were judged as transparent, and given a score of 10.

**TABLE 5**

| Powder pigment composition | B-type viscometer | Transparency |
|---|---|---|
| Pigment Invention 5 | 100% | 5 |
| Comparative Pigment 5-1 | 170% | 1 |
| Comparative Pigment 5-2 | 200% | 2 |

All of the pigment compositions from the Examples of the present invention comprised 98.0 to 72.3% by weight of the aforementioned disazo pigment, and 2.0 to 27.8% by weight of a disazo compound.

Moreover, all of the pigment compositions from the Examples of the present invention exhibited a weight ratio of the asymmetric disazo compound/ symmetric disazo compound of at least 95/5. The lithographic inks and gravure inks obtained by means of using the pigments, prepared according to the pigment compositions of the present invention, exhibited superior transparencies and flow abilities as printing inks. In contrast, conventional lithographic inks and gravure inks obtained by means of using the pigments, prepared according to the Comparative Examples, exhibited inferior transparencies and flow abilities as printing inks, when compared to those prepared according to the present invention.

### INDUSTRIAL APPLICABILITY

According to the method of the present invention, by means of inducing a coupling reaction by pouring the aforementioned coupler components simultaneously into an acidic solution such that, in the reaction system, none of the coupler components are substantially precipitated, and the tetrazo component reacts immediately, it is theoretically possible to simultaneously synthesize a pigment component and pigment derivative. As a result, an even better treatment of the pigment surface is possible, wherein an asymmetric disazo pigment compound, comprising a polar coupling component and non-polar coupling component, is contained in much greater amounts than the conventional examples, which in turn leads to a superior transparency and flow ability. Moreover, the disazo pigment compositions obtained accordingly are capable of providing printing inks exhibiting a superior transparency and flow ability.

## Claims

1. A disazo pigment composition **characterized by** comprising, as essential components, a disazo pigment represented by general formula A, and an asymmetric disazo compound represented by general formula B, wherein,
(1) said disazo pigment composition is obtainable by the method according to claim 3;
(2) said disazo pigment composition comprises 98.0 to 72.3% by weight of said disazo pigment and 2.0 to 27.8% by weight of disazo compounds other than said disazo pigment; and
(3) said asymmetric disazo compound represented by general formula B comprises at least 93 parts by weight, when the total weight of disazo compounds other than said disazo pigment is 100 parts by weight. 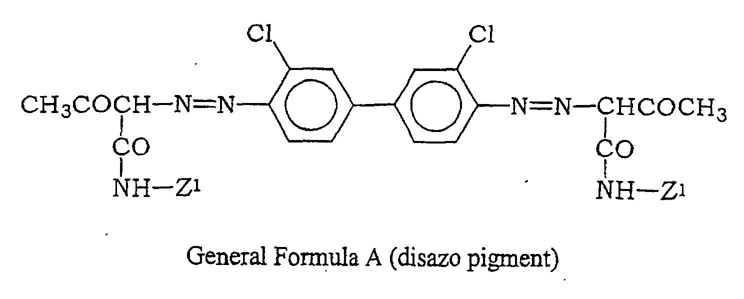 [wherein, Z¹ represents a phenyl group, which may contain 1 to 4 identical or different substituent group(s), selected from the group consisting of a methyl group, methoxy group, and chlorine atom]. 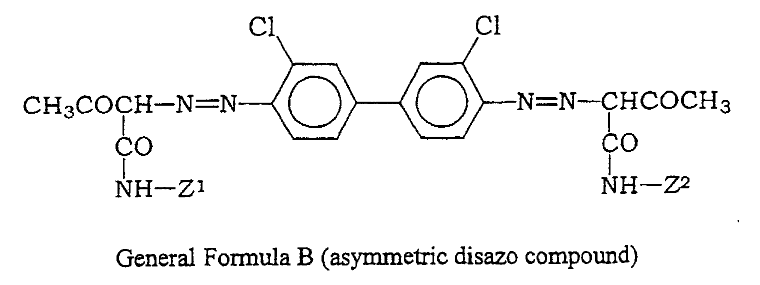 [wherein, Z¹ represents a phenyl group, which may contain 1 to 4 identical or different substituent group(s), selected from the group consisting of a methyl group, methoxy group, and chlorine atom; and Z² represents a phenyl group which may contain 1 to 4 identical or different substituent group(s), selected from the group consisting of a methyl group, methoxy group, hydroxide group, and chlorine atom; and said phenyl group contains 1 to 4 identical or different substituent group(s), selected from the group consisting of a carboxyl group, sulfo group, and alkali metal salts thereof].

2. A disazo pigment composition **characterized by** comprising, as essential components, a disazo pigment represented by general formula A, an asymmetric disazo compound represented by general formula B, and a symmetric disazo compound represented by general formula C, wherein,
(1) said disazo pigment composition is obtainable by the method according to claim 3;
(2) said disazo pigment composition comprises 98.0 to 72.3% by weight of said disazo pigment and 2.0 to 27.8% by weight of disazo compounds other than said disazo pigment; and
(3) the weight ratio of said asymmetric disazo compound represented by general formula B to said symmetric disazo compound represented by general formula C is less than 100/0 parts by weight and at least 93/7 parts by weight when the total weight of disazo compounds other than said disazo pigment is 100 parts by weight. 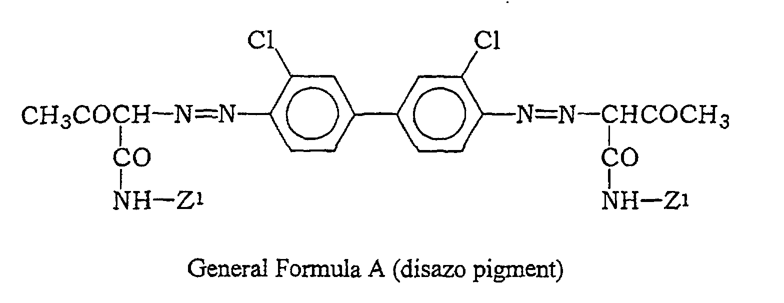 [wherein, Z¹ represents a phenyl group, which may contain 1 to 4 identical or different substituent group(s), selected from the group consisting of a methyl group, methoxy group, and chlorine atom]. 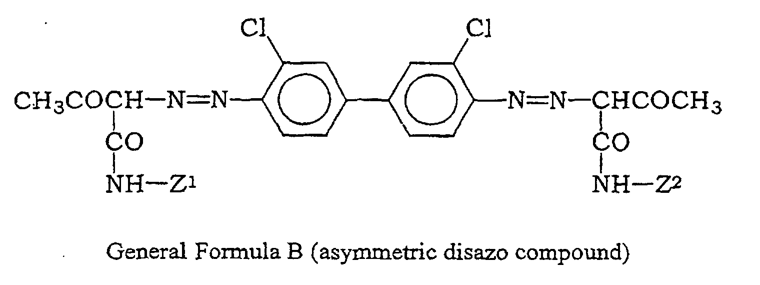 [wherein, Z¹ represents a phenyl group, which may contain 1 to 4 identical or different substituent group(s), selected from the group consisting of a methyl group, methoxy group, and chlorine atom; and Z² represents a phenyl group which may contain 1 to 4 identical or different substituent group(s), selected from the group consisting of a methyl group, methoxy group, hydroxide group, and chlorine atom; and said phenyl group contains 1 to 4 identical or different substituent group(s), selected from the group consisting of a carboxyl group, sulfo group, and alkali metal salts thereof]. 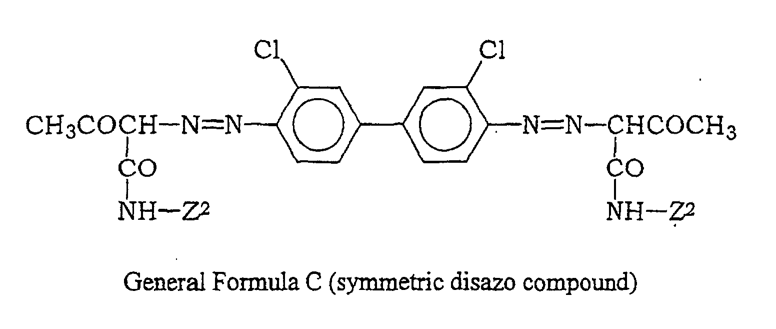 [wherein, Z² represents a phenyl group which may contain 1 to 4 identical or different substituent group(s), selected from the group consisting of a methyl group, methoxy group, hydroxide group, and chlorine atom; and said phenyl group contains 1 to 4 identical or different substituent group(s), selected from the group consisting of a carboxyl group, sulfo group, and alkali metal salts thereof].

3. A method for manufacturing a disazo pigment composition comprising the steps of: simultaneously producing a disazo pigment represented by general formula A, and an asymmetric disazo compound represented by general formula B, by means of performing a coupling reaction in which an aqueous coupler solution containing a non-polar coupler component (I) represented by general formula (I) and a polar coupler component (II) represented by general formula (II), and an aqueous tetrazo solution containing a tetrazo component of a benzidine, are simultaneously poured into an acidic solution, such that, in the reaction system, said coupler components are not substantially precipitated, and the tetrazo component reacts immediately. 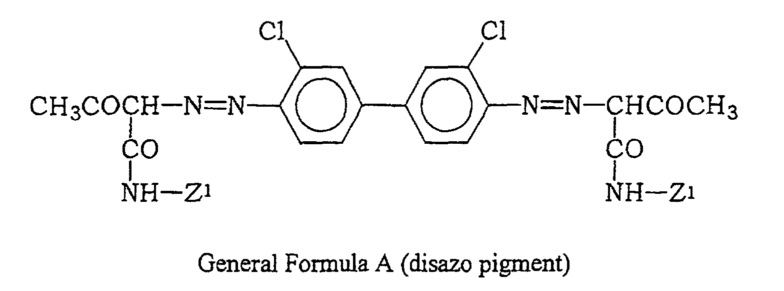 [wherein, Z¹ represents a phenyl group, which may contain 1 to 4 identical or different substituent group(s), selected from the group consisting of a methyl group, methoxy group, and chlorine atom]. 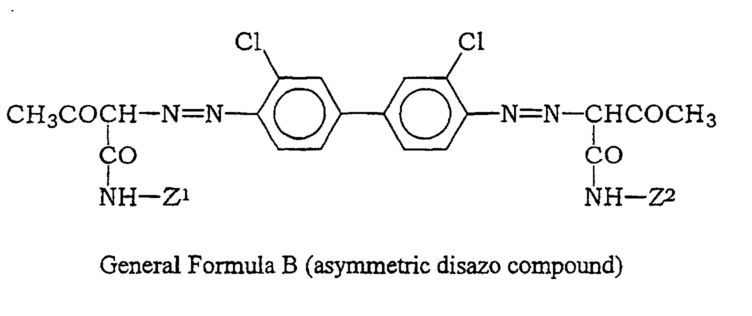 [wherein, Z¹ represents a phenyl group, which may contain 1 to 4 identical or different substituent group(s), selected from the group consisting of a methyl group, methoxy group, and chlorine atom; and Z² represents a phenyl group which may contain 1 to 4 identical or different substituent group(s), selected from the group consisting of a methyl group, methoxy group, hydroxide group, and chlorine atom; and said phenyl group contains I to 4 identical or different substituent group(s), selected from the group consisting of a carboxyl group, sulfo group, and alkali metal salts thereof].
CH₃COCH₂CONH - Z General Formula (I)
[wherein, Z represents a phenyl group which may contain 1 to 4 identical or different substituent group(s), selected from the group consisting of a methyl group, methoxy group, and chlorine atom].
CH₃COCH₂CONH - Y General Formula (II)
[wherein, Y represents a phenyl group which may contain 1 to 4 identical or different substituent group(s), selected from the group consisting of a methyl group, methoxy group, hydroxide group, and chlorine atom; and said phenyl group contains 1 to 4 identical or different substituent group(s), selected from the group consisting of a carboxyl group, sulfo group, and alkali metal salts thereof].

4. A method for manufacturing a disazo pigment composition according to Claim 3, wherein, when the sum of said coupler component (I) and said coupler component (II) is 100 mol%, said coupler component (I) comprises 85 to 99 mol%, and said coupler component (II) comprises 1 to 15 mol%.

5. A method for improving transparency and flow ability of a disazo pigment represented by general formula A comprising:
(1) preparing a disazo pigment composition by a method according to claim 3, uniformly adsorbing at least a portion of an asymmetric disazo compound represented by general formula B to the primary particles of said disazo pigment, or alternatively including at least a portion of said asymmetric disazo compound in the crystalline structure thereof, such that
(2) said disazo pigment composition comprises 98.0 to 72.3% by weight of said disazo pigment and 2.0 to 27.8% by weight of disazo compounds other than said disazo pigment; and
(3) said asymmetric disazo compound represented by general formula B comprises at least 93 parts by weight, when the total weight of disazo compounds other than said disazo pigment is 100 parts by weight. 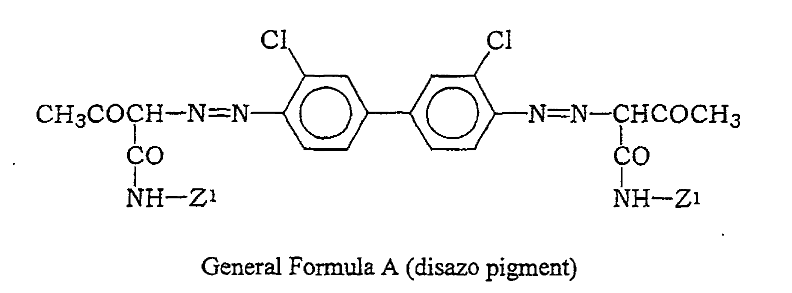 [wherein, Z¹ represents a phenyl group, which may contain 1 to 4 identical or different substituent group(s), selected from the group consisting of a methyl group, methoxy group, and chlorine atom]. 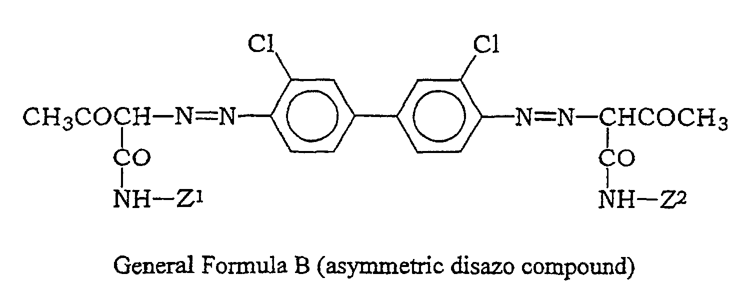 [wherein, Z¹ represents a phenyl group, which may contain 1 to 4 identical or different substituent group(s), selected from the group consisting of a methyl group, methoxy group, and chlorine atom; and Z² represents a phenyl group which may contain 1 to 4 identical or different substituent group(s), selected from the group consisting of a methyl group, methoxy group, hydroxide group, and chlorine atom; and said phenyl group contains 1 to 4 identical or different substituent group(s), selected from the group consisting of a carboxyl group, sulfo group, and alkali metal salts thereof].

## Patentansprüche

1. Disazopigmentzusammensetzung, **dadurch gekennzeichnet, dass** sie als wesentliche Komponenten ein Disazopigment der allgemeinen Formel A und eine asymmetrische Disazoverbindung der allgemeinen Formel B enthält, wobei
(1) die genannte Disazopigmentzusammensetzung durch das Verfahren nach Anspruch 3 erhältlich ist,
(2) die genannte Disazopigmentzusammensetzung 98,0 bis 72,3 Gew.-% Disazopigment und 2,0 bis 27,8 Gew.-% andere Disazoverbindungen als das genannte Disazopigment enthält,
(3) der Gehalt der genannten asymmetrischen Disazoverbindung der allgemeinen Formel B mindestens 93 Gewichtsteile beträgt, wenn die Gesamtgewichtsmenge der anderen Disazoverbindungen als das genannte Disazopigment 100 Gewichtsteile beträgt 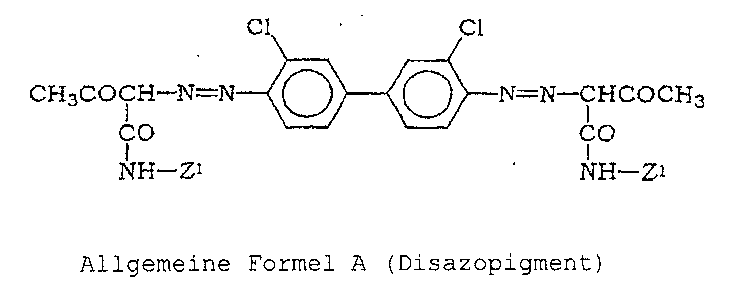 [worin Z¹ für eine Phenylgruppe steht, die 1 bis 4 gleiche oder verschiedene Substituentengruppen, ausgewählt aus der Gruppe, bestehend aus einer Methylgruppe, Methoxygruppe und einem Chloratom, aufweisen kann]. 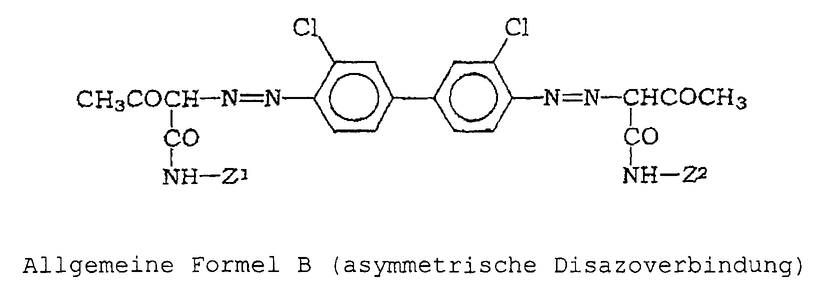 [worin Z¹ für eine Phenylgruppe steht, die 1 bis 4 gleiche oder verschiedene Substituentengruppen, ausgewählt aus der Gruppe, bestehend aus einer Methylgruppe, Methoxygruppe und einem Chloratom, aufweisen kann; und Z² für eine Phenylgruppe steht, die 1 bis 4 gleiche oder verschiedene Substituentengruppen, ausgewählt aus der Gruppe, bestehend aus einer Methylgruppe, Methoxygruppe, Hydroxidgruppe und einem Chloratom, aufweisen kann; und wobei die genannte Phenylgruppe 1 bis 4 gleiche oder verschiedene Substituentengruppen, ausgewählt aus der Gruppe, bestehend aus einer Carboxylgruppe, Sulfogruppe und Alkalimetallsalzen davon, aufweisen kann].

2. Disazopigmentzusammensetzung, **dadurch gekennzeichnet, dass** sie als wesentliche Komponenten ein Disazopigment der allgemeinen Formel A, eine asymmetrische Disazoverbindung der allgemeinen Formel B und eine symmetrische Disazoverbindung der allgemeinen Formel C enthält, wobei
(1) die genannte Disazopigmentzusammensetzung durch das Verfahren nach Anspruch 3 erhältlich ist,
(2) die genannte Disazopigmentzusammensetzung 98,0 bis 72,3 Gew.-% Disazopigment und 2,0 bis 27,8 Gew.-% andere Disazoverbindungen als das genannte Disazopigment enthält,
(3) das Gewichtsverhältnis der genannten asymmetrischen Disazoverbindung der allgemeinen Formel B zu der genannten symmetrischen Disazoverbindung der allgemeinen Formel C weniger als 100/0 Gewichtsteile und mindestens 93/7 Gewichtsteile beträgt, wenn die Gesamtgewichtsmenge der anderen Disazoverbindungen als das genannte Disazopigment 100 Gewichtsteile beträgt. 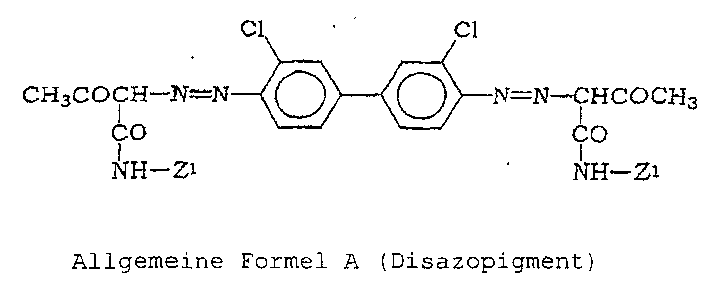 [worin Z¹ für eine Phenylgruppe steht, die 1 bis 4 gleiche oder verschiedene Substituentengruppen, ausgewählt aus der Gruppe, bestehend aus einer Methylgruppe, Methoxygruppe und einem Chloratom, aufweisen kann]. 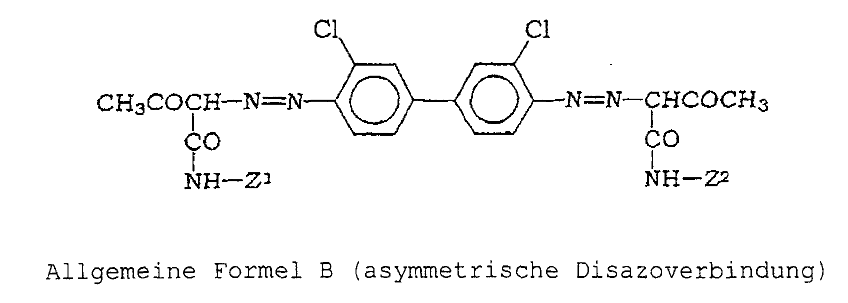 [worin Z¹ für eine Phenylgruppe steht, die 1 bis 4 gleiche oder verschiedene Substituentengruppen, ausgewählt aus der Gruppe, bestehend aus einer Methylgruppe, Methoxygruppe und einem Chloratom, aufweisen kann; und Z² für eine Phenylgruppe steht, die 1 bis 4 gleiche oder verschiedene Substituentengruppen, ausgewählt aus der Gruppe, bestehend aus einer Methylgruppe, Methoxygruppe, Hydroxidgruppe und einem Chloratom, aufweisen kann; und wobei die genannte Phenylgruppe 1 bis 4 gleiche oder verschiedene Substituentengruppen, ausgewählt aus der Gruppe, bestehend aus einer Carboxylgruppe, Sulfogruppe und Alkalimetallsalzen davon, aufweisen kann]. 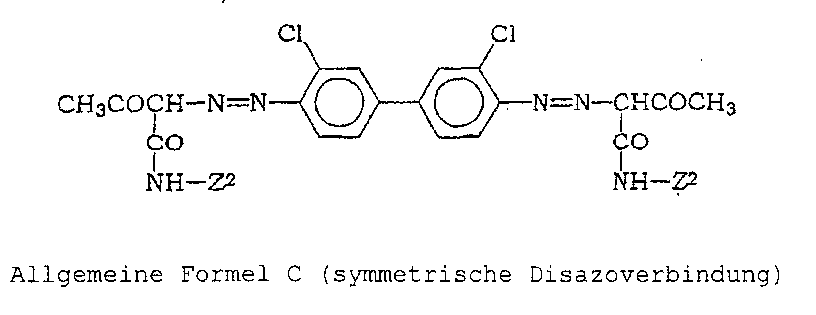 [worin Z² für eine Phenylgruppe steht, die 1 bis 4 gleiche oder verschiedene Substituentengruppen, ausgewählt aus der Gruppe, bestehend aus einer Methylgruppe, Methoxygruppe, Hydroxylgruppe und einem Chloratom, aufweisen kann; und wobei die genannte Phenylgruppe 1 bis 4 gleiche oder verschiedene Substituentengruppen, ausgewählt aus der Gruppe, bestehend aus einer Carboxylgruppe, Sulfogruppe und Alkalimetallsalzen davon, aufweisen kann].

3. Verfahren zur Herstellung einer Disazopigmentzusammensetzung, umfassend die Stufen: gleichzeitige Herstellung eines Disazopigments der allgemeinen Formel A und einer asymmetrischen Disazoverbindung der allgemeinen Formel B mittels Durchführung einer Kupplungsreaktion, bei der eine wässrige Kupplerlösung, enthaltend eine nicht-polare Kupplerkomponente (I) der allgemeinen Formel (I) und eine polare Kupplerkomponente (II) der allgemeinen Formel (II) und eine wässrige Tetrazolösung, enthaltend eine Tetrazokomponente eines Benzidins, gleichzeitig derart in eine saure Lösung eingegossen werden, dass in dem Reaktionssystem die genannten Kupplerkomponenten nicht wesentlich ausgefällt werden und die Tetrazokomponente sofort reagiert. 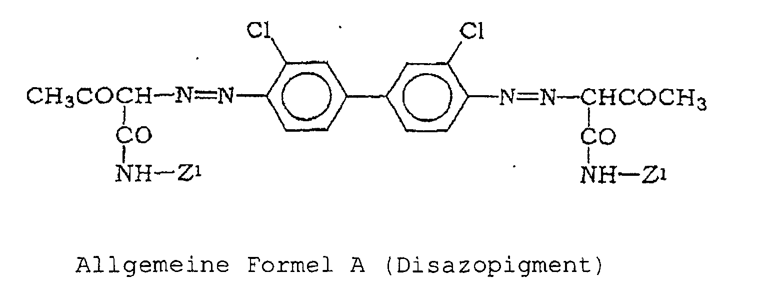 [worin Z¹ für eine Phenylgruppe steht, die 1 bis 4 gleiche oder verschiedene Substituentengruppen, ausgewählt aus der Gruppe, bestehend aus einer Methylgruppe, Methoxygruppe und einem Chloratom, aufweisen kann]. 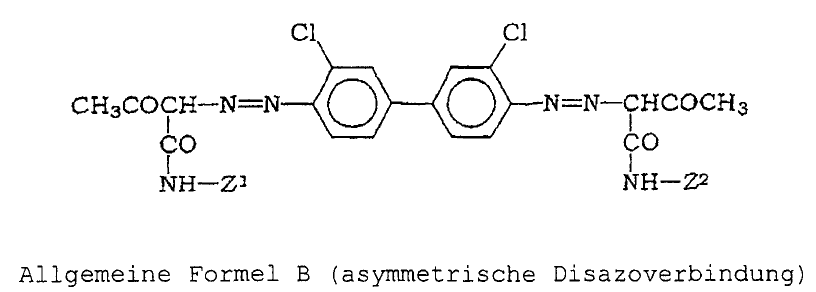 [worin Z¹ für eine Phenylgruppe steht, die 1 bis 4 gleiche oder verschiedene Substituentengruppen, ausgewählt aus der Gruppe, bestehend aus einer Methylgruppe, Methoxygruppe und einem Chloratom, aufweisen kann; und Z² für eine Phenylgruppe steht, die 1 bis 4 gleiche oder verschiedene Substituentengruppen, ausgewählt aus der Gruppe, bestehend aus einer Methylgruppe, Methoxygruppe, Hydroxidgruppe und einem Chloratom, aufweisen kann; und wobei die genannte Phenylgruppe 1 bis 4 gleiche oder verschiedene Substituentengruppen, ausgewählt aus der Gruppe, bestehend aus einer Carboxylgruppe, Sulfogruppe und Alkalimetallsalzen davon, aufweisen kann].
CH₃COCH₂CONH-Z Allgemeine Formel (I)
[worin Z für eine Phenylgruppe steht, die 1 bis 4 gleiche oder verschiedene Substituentengruppen, ausgewählt aus der Gruppe, bestehend aus einer Methylgruppe, Methoxygruppe und einem Chloratom, aufweisen kann].
CH₃COCH₂CONH-Y Allgemeine Formel (II)
[worin Y für eine Phenylgruppe steht, die 1 bis 4 gleiche oder verschiedene Substituentengruppen, ausgewählt aus der Gruppe, bestehend aus einer Methylgruppe, Methoxygruppe, Hydroxylgruppe und einem Chloratom, aufweisen kann; und wobei die genannte Phenylgruppe 1 bis 4 gleiche oder verschiedene Substituentengruppen, ausgewählt aus der Gruppe, bestehend aus einer Carboxylgruppe, Sulfogruppe und Alkalimetallsalzen davon, aufweisen kann].

4. Verfahren zur Herstellung einer Disazopigmentzusammensetzung nach Anspruch 3, **dadurch gekennzeichnet, dass**, wenn die Summe der genannten Kupplerkomponente (I) und der genannten Kupplerkomponente (II) 100 mol% beträgt, der Anteil der genannten Kupplerkomponente (I) 85 bis 99 mol% beträgt und der Anteil der genannten Kupplerkomponente (II) 1 bis 15 mol% beträgt.

5. Verfahren zur Verbesserung der Transparenz und der Fließfähigkeit eines Disazopigments der allgemeinen Formel A, umfassend:
(1) die Herstellung einer Disazopigmentzusammensetzung durch ein Verfahren nach Anspruch 3, die gleichförmige Adsorption mindestens eines Teils einer asymmetrischen Disazoverbindung der allgemeinen Formel B an den primären Teilchen des genannten Disazopigments oder das alternative Einschließen mindestens eines Teils der genannten asymmetrischen Disazoverbindung in der Kristallstruktur davon, derart, dass
(2) die genannte Disazopigmentzusammensetzung 98,0 bis 72,3 Gew.-% Disazopigment und 2,0 bis 27,8 Gew.-% andere Disazoverbindungen als das genannte Disazopigment enthält; und
(3) der Anteil der genannten asymmetrischen Disazoverbindung der allgemeinen Formel B mindestens 93 Gewichtsteile beträgt, wenn die Gesamtmenge der anderen Disazoverbindungen als das genannte Disazopigment 100 Gewichtsteile beträgt. 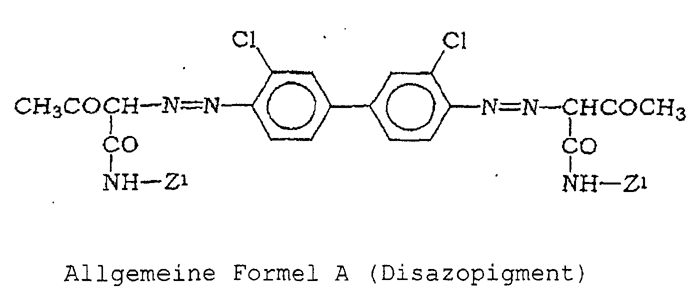 [worin Z¹ für eine Phenylgruppe steht, die 1 bis 4 gleiche oder verschiedene Substituentengruppen, ausgewählt aus der Gruppe, bestehend aus einer Methylgruppe, Methoxygruppe und einem Chloratom, aufweisen kann]. 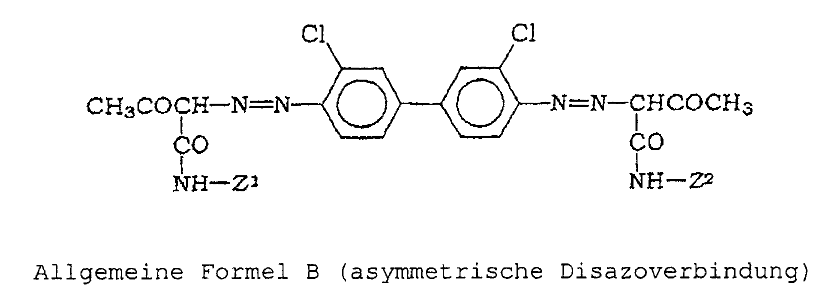 [worin Z¹ für eine Phenylgruppe steht, die 1 bis 4 gleiche oder verschiedene Substituentengruppen, ausgewählt aus der Gruppe, bestehend aus einer Methylgruppe, Methoxygruppe und einem Chloratom, aufweisen kann; und Z² für eine Phenylgruppe steht, die 1 bis 4 gleiche oder verschiedene Substituentengruppen, ausgewählt aus der Gruppe, bestehend aus einer Methylgruppe, Methoxygruppe, Hydroxidgruppe und einem Chloratom, aufweisen kann; und wobei die genannte Phenylgruppe 1 bis 4 gleiche oder verschiedene Substituentengruppen, ausgewählt aus der Gruppe, bestehend aus einer Carboxylgruppe, Sulfogruppe und Alkalimetallsalzen davon, aufweisen kann].

## Revendications

1. Composition de pigment diazoïque, **caractérisée en ce qu'**elle comprend en tant que composants essentiels, un pigment diazoïque représenté par la formule générale A et un composé diazoïque asymétrique représenté par la formule générale B, dans laquelle
(1) ladite composition de pigment diazoïque peut être obtenue par le procédé suivant la revendication 3 ;
(2) ladite composition de pigment diazoïque contient de 98,0% à 72,3% en poids dudit pigment diazoïque et de 2,0% à 27,8% en poids de composés diazoïques autres que ledit pigment diazoïque ; et
(3) ledit composé diazoïque asymétrique représenté par la formule générale B représente au moins 93 parties en poids, lorsque le poids total des composés diazoïques autres que ledit pigment diazoïque est de 100 parties en poids. 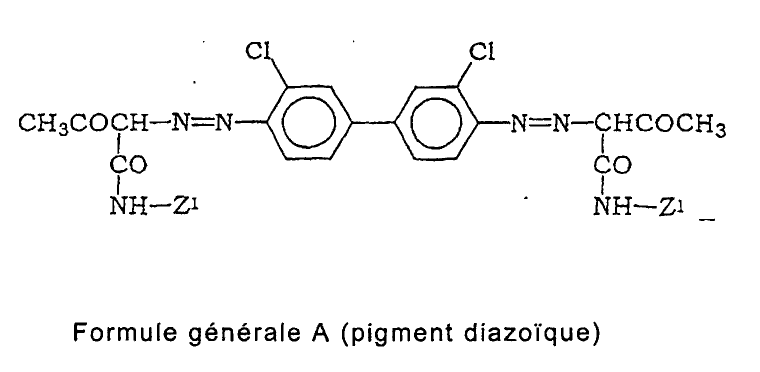
dans laquelle, Z¹ représente un groupe phényle qui peut contenir 1 à 4 groupes substituants identiques ou différents, choisis dans le groupe consistant en groupe méthyle, groupe méthoxy et atome de chlore. 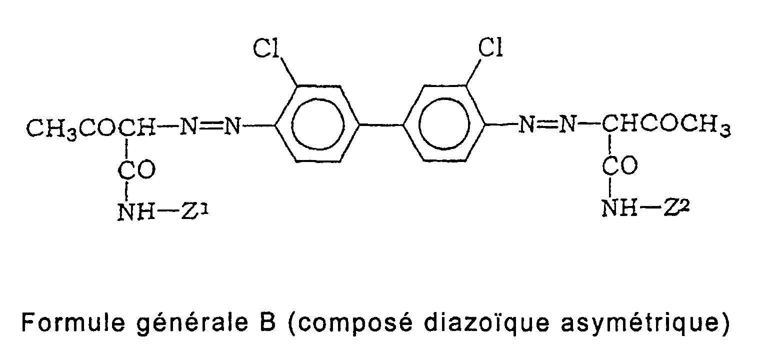 dans laquelle, Z¹ représente un groupe phényle qui peut contenir 1 à 4 groupes substituants identiques ou différents, choisis dans le groupe consistant en groupe méthyle, groupe méthoxy et atome de chlore ; et Z² représente un groupe phényle qui peut contenir 1 à 4 groupes substituants identiques ou différents, choisis dans le groupe consistant en groupe méthyle, groupe méthoxy, groupe hydroxy et atome de chlore ; et ledit groupe phényle contient 1 à 4 groupes substituants identiques ou différents, choisis dans le groupe consistant en groupe carboxy, groupe sulfo et sels de métaux alcalins de ceux-ci.

2. Composition de pigment diazoïque, **caractérisée en ce qu'**elle comprend en tant que composants essentiels, un pigment diazoïque représenté par la formule générale A, un composé diazoïque asymétrique représenté par la formule générale B et un composé diazoïque symétrique représenté par la formule générale C, dans laquelle
(1) ladite composition de pigment diazoïque peut être obtenue par le procédé suivant la revendication 3 ;
(2) ladite composition de pigment diazoïque contient de 98,0% à 72,3% en poids dudit pigment diazoïque et de 2,0% à 27,8% en poids de composés diazoïques autres que ledit pigment diazoïque ; et
(3) le rapport pondéral dudit composé diazoïque asymétrique représenté par la formule générale B audit composé diazoïque symétrique représenté par la formule générale C est inférieur à 100/0 parties en poids et d'au moins 93/7 parties en poids lorsque le poids total des composés diazoïques autres que ledit pigment diazoïque est de 100 parties en poids. 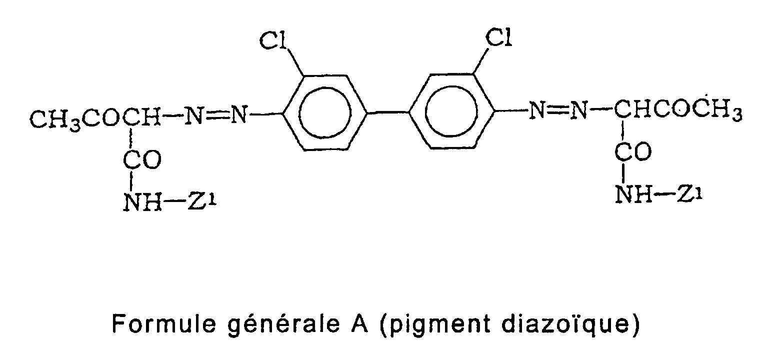
dans laquelle, Z¹ représente un groupe phényle qui peut contenir 1 à 4 groupes substituants identiques ou différents, choisis dans le groupe consistant en groupe méthyle, groupe méthoxy et atome de chlore. 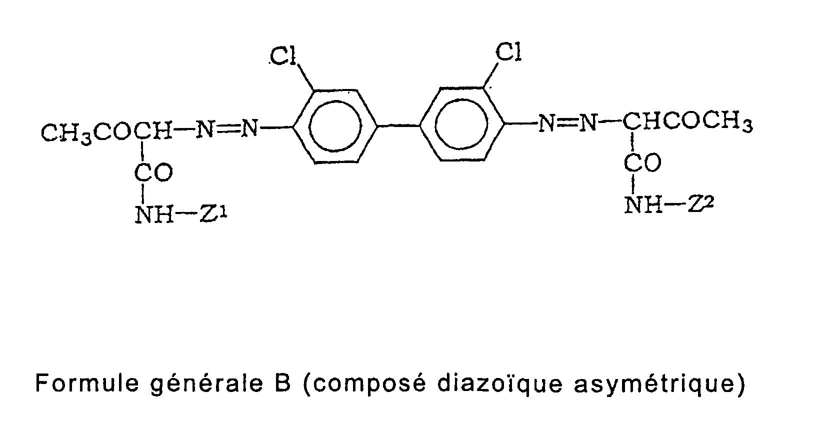 dans laquelle, Z¹ représente un groupe phényle qui peut contenir 1 à 4 groupes substituants identiques ou différents, choisis dans le groupe consistant en groupe méthyle, groupe méthoxy et atome de chlore ; et Z² représente un groupe phényle qui peut contenir 1 à 4 groupes substituants identiques ou différents, choisis dans le groupe consistant en groupe méthyle, groupe méthoxy, groupe hydroxy et atome de chlore ; et ledit groupe phényle contient 1 à 4 groupes substituants identiques ou différents, choisis dans le groupe consistant en groupe carboxy, groupe sulfo et sels de métaux alcalins de ceux-ci. 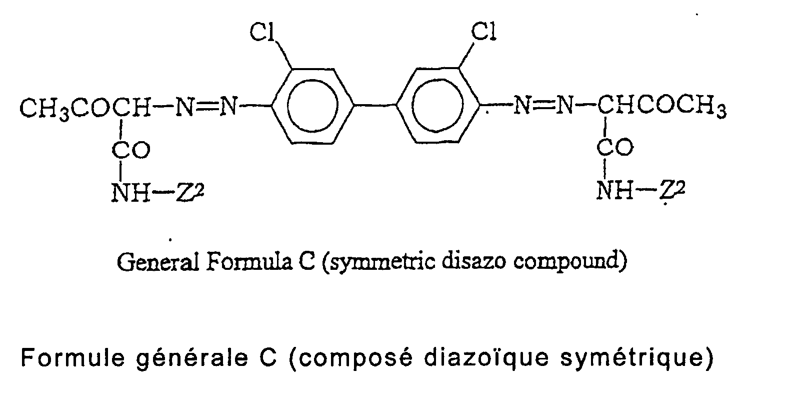 dans laquelle, Z² représente un groupe phényle qui peut contenir 1 à 4 groupes substituants identiques ou différents, choisis dans le groupe consistant en groupe méthyle, groupe méthoxy, groupe hydroxy et atome de chlore ; et ledit groupe phényle contient 1 à 4 groupes substituants identiques ou différents, choisis dans le groupe consistant en groupe carboxy, groupe sulfo et sels de métaux alcalins de ceux-ci.

3. Procédé de préparation d'une composition de pigment diazoïque qui comprend les étapes de : production simultanée d'un pigment diazoïque représenté par la formule générale A et d'un composé diazoïque asymétrique représenté par la formule générale B au moyen de la réalisation d'une réaction de couplage dans laquelle une solution aqueuse d'agents de couplage contenant un composant de couplage non polaire (I) représenté par la formule (I) et un composant de couplage polaire (II) représenté par la formule (II), et une solution tétrazoïque aqueuse contenant un composant tétrazoïque d'une benzidine, sont versées simultanément dans une solution acide, de telle sorte que dans le système réactionnel, aucun desdits composants de couplage ne précipite de façon substantielle et que le composant tétrazoïque réagit immédiatement. 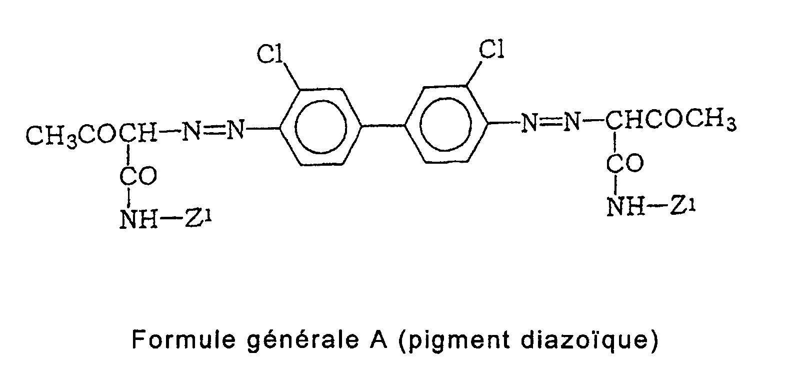 dans laquelle, Z¹ représente un groupe phényle qui peut contenir 1 à 4 groupes substituants identiques ou différents, choisis dans le groupe consistant en groupe méthyle, groupe méthoxy et atome de chlore. 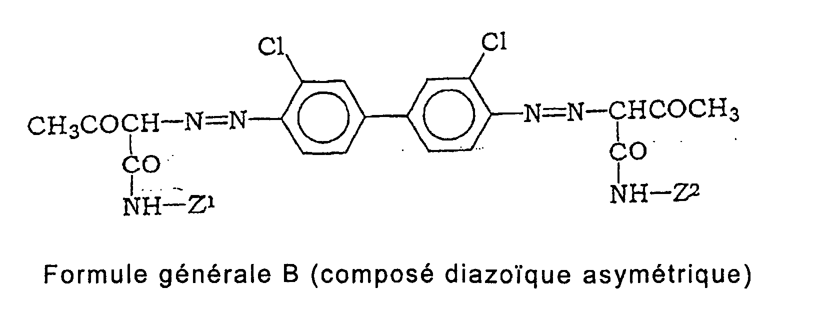 dans laquelle, Z¹ représente un groupe phényle qui peut contenir 1 à 4 groupes substituants identiques ou différents, choisis dans le groupe consistant en groupe méthyle, groupe méthoxy et atome de chlore ; et Z² représente un groupe phényle qui peut contenir 1 à 4 groupes substituants identiques ou différents, choisis dans le groupe consistant en groupe méthyle, groupe méthoxy, groupe hydroxy et atome de chlore ; et ledit groupe phényle contient 1 à 4 groupes substituants identiques ou différents, choisis dans le groupe consistant en groupe carboxy, groupe sulfo et sels de métaux alcalins de ceux-ci.
CH₃COCH₂CONH-Z Formule Générale (I)
dans laquelle, Z représente un groupe phényle qui peut contenir 1 à 4 groupes substituants identiques ou différents, choisis dans le groupe consistant en groupe méthyle, groupe méthoxy et atome de chlore.
CH₃COCH₂CONH-Y Formule Générale (II)
dans laquelle, Y représente un groupe phényle qui peut contenir 1 à 4 groupes substituants identiques ou différents, choisis dans le groupe consistant en groupe méthyle, groupe méthoxy, groupe hydroxy et atome de chlore, et ledit groupe phényle contient 1 à 4 groupes substituants identiques ou différents, choisis dans le groupe consistant en groupe carboxy, groupe sulfo et sels de métaux alcalins de ceux-ci.

4. Procédé de préparation d'une composition de pigment diazoïque suivant la revendication 3 dans lequel, lorsque la somme dudit composant de couplage (I) et dudit composant de couplage (II) représente 100% en moles, ledit composant de couplage (I) représente de 85% à 99% en moles et ledit composant de couplage (II) représente de 1% à 15% en moles.

5. Procédé destiné à améliorer la transparence et l'aptitude à l'écoulement d'un pigment diazoïque représenté par la formule A qui comprend :
(1) la préparation d'une composition de pigment diazoïque par un procédé suivant la revendication 3, l'adsorption de façon uniforme d'au moins une partie d'un composé diazoïque asymétrique représenté par la formule générale B sur les particules primaires dudit pigment diazoïque, ou dans une variante, l'inclusion d'au moins une partie dudit composé diazoïque asymétrique dans la structure cristalline de celles-ci, de telle sorte que :
(2) ladite composition de pigment diazoïque contient de 98,0% à 72,3% en poids dudit pigment diazoïque et de 2,0% à 27,8% en poids de composés diazoïques autres que ledit pigment diazoïque ; et
(3) ledit composé diazoïque asymétrique représenté par la formule générale B représente au moins 93 parties en poids, lorsque le poids total des composés diazoïques autres que ledit pigment diazoïque est de 100 parties en poids. 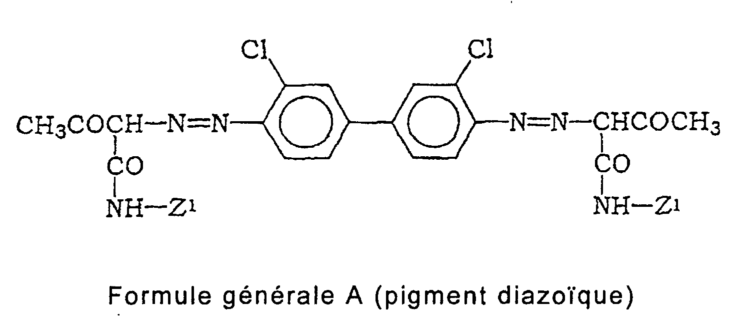
dans laquelle, Z¹ représente un groupe phényle qui peut contenir 1 à 4 groupes substituants identiques ou différents, choisis dans le groupe consistant en groupe méthyle, groupe méthoxy et atome de chlore. 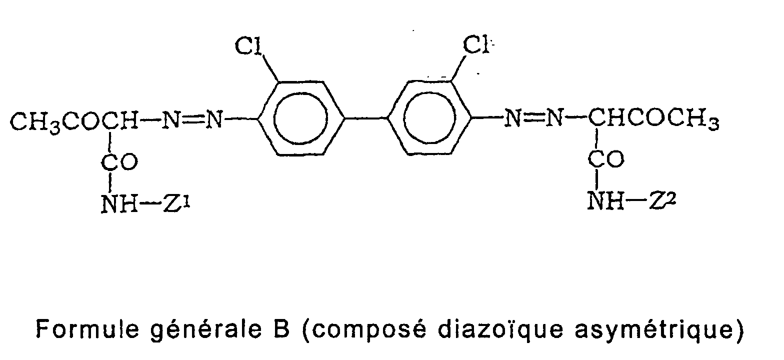 dans laquelle, Z¹ représente un groupe phényle qui peut contenir 1 à 4 groupes substituants identiques ou différents, choisis dans le groupe consistant en groupe méthyle, groupe méthoxy et atome de chlore ; et Z² représente un groupe phényle qui peut contenir 1 à 4 groupes substituants identiques ou différents, choisis dans le groupe consistant en groupe méthyle, groupe méthoxy, groupe hydroxy et atome de chlore ; et ledit groupe phényle contient 1 à 4 groupes substituants identiques ou différents, choisis dans le groupe consistant en groupe carboxy, groupe sulfo et sels de métaux alcalins de ceux-ci.
